# EUROPÄISCHE PATENTSCHRIFT

(11) **EP 3 909 876 B1**
(45) Veröffentlichungstag und Bekanntmachung des Hinweises auf die Patenterteilung: **12.06.2024**
(21) Anmeldenummer: 21155658.4
(22) Anmeldetag: 08.02.2021
(51) Int. Cl.: B65B 25/00, B65B 9/06, B65B 11/06, B65B 11/10

(54) **VERFAHREN UND VORRICHTUNG ZUM VERPACKEN UND VERSIEGELN KLEINSTÜCKIGER ARTIKEL IN PARTIELL VORGEHEIZTEM, HEISSSIEGELFÄHIGEM PACKMITTEL**
METHOD AND DEVICE FOR PACKAGING AND SEALING SMALL ARTICLES IN PARTIALLY PRE-HEATED, HEAT-SEALABLE PACKAGING MATERIAL
PROCÉDÉ ET DISPOSITIF D'EMBALLAGE ET DE SCELLEMENT DES ARTICLES DE PETITE TAILLE DANS UN EMBALLAGE PARTIELLEMENT PRÉCHAUFFÉ ET THERMO-SCELLABLE

(30) Priorität: 12.05.2020 DE 102020205945
(43) Veröffentlichungstag der Anmeldung: 17.11.2021
(73) Patentinhaber: Theegarten-Pactec GmbH & Co. KG, 01237 Dresden (DE)
(72) Erfinder: John, Steffen, 01217 Dresden (DE); Berger, Stefan, 01156 Dresden (DE); König, Peter, 01067 Dresden (DE)
(74) Vertreter: Grünecker Patent- und Rechtsanwälte PartG mbB

(56) Entgegenhaltungen:
- EP-A1- 3 287 374
- WO-A1-2014/056589
- US-A1- 2009 152 261

## Beschreibung

Die vorliegende Erfindung betrifft ein Verfahren und eine Vorrichtung zum Verpacken und Versiegeln kleinstückiger Artikel in einem partiell vorgeheizten, heißsiegelfähigen Packmittel.

Verfahren und Vorrichtungen zum Verpacken und Versiegeln kleinstückiger Artikel in einem heißsiegelfähigen Packmittel sind beispielsweise aus der EP 2 228 306 A1, WO 2014/056589 A1 oder der DE 10 2018 209 185 bekannt. Die US 2009/152261 A1 offenbart eine Verpackungsmaschine zum Verpacken von mit Packgut zu füllenden, vorzugsweise muldenförmigen Verpackungen, wobei eine Heizung vorgesehen ist, die als Induktionsheizung ausgebildet ist.

In der Vergangenheit sind die Anforderungen an die heißsiegelfähigen Packmittel stetig gestiegen. Hierbei lassen sich zwei wesentliche Hauptrichtungen erkennen:
- Einsatz von Folien mit stärkeren Barriereschichten, beispielsweise als separater Aluminium-Layer
- Einsatz dünnerer, sensibler Folien (sowohl Verbundfolien, als auch Monofolien)

Aktuelle Markttendenzen zeigen deutlich eine bevorstehende Trendwende für den Einsatz der zu verwendenden Packmittel auf. Sowohl die Nachfrage, als auch die Forderung nach dem Einsatz nachhaltiger Packmittel steigt kontinuierlich. U.a. sind hierbei folgende Richtungen erkennbar:
- Fortwährende Einsparung des einzusetzenden Rohstoffes
- Einsatz nachhaltiger, biologisch abbaubarer Rohstoffe (Kunststoffe)
- Einsatz von Verpackungsmaterialien auf Basis von Papierwerkstoffen

Diese neuen Anforderungen an Packmittel erfordern eine Anpassung der technischen Ausstattung von Verpackungs- und Versiegelungsmaschinen.

Mit bisherigen Technologien ist eine dichte Versiegelung der Verpackungen im geforderten hohen Leistungsbereich sowie unter Anwendung empfindlicher Packmittel teilweise nicht in der geforderten Qualität möglich. Die hergestellten Siegelnähte weisen unter Umständen Undichtigkeiten auf, sodass der vom Kunden geforderte Produktschutz nicht ausreichend gewährleistet werden kann. Der vorliegenden Erfindung liegt die Aufgabe zugrunde, ein Verfahren und eine Vorrichtung zum Verpacken und Versiegeln kleinstückiger Artikel in einem heißsiegelfähigen Packmittel bereitzustellen, um insbesondere für neuartige, sensitive Packmittel, wie z.B. Packmittel aus Papier oder biologisch abbaubarem Kunststoff oder Monomaterialien, oder Packmittel mit einer Barriereschicht, eine dichte Versiegelung der Verpackung zu gewährleisten.

Zur Lösung dieser Aufgabe stellt die vorliegende Erfindung das Verfahren nach Anspruch 1 und die Vorrichtung nach Anspruch 7 bereit.

Das erfindungsgemäße Verfahren zum Verpacken und Versiegeln kleinstückiger Artikel, (insbesondere Lebensmittel oder Verbrauchsgüter) wie Süßwaren, Brühtabletten oder Waschtabs, in heißsiegelfähigem Packmittel, umfasst die Schritte:
- Schritt A: Bereitstellen des heißsiegelfähigen Packmittels.
- Schritt B: Bereitstellen der kleinstückigen Artikel, vorzugsweise in Reihe entlang wenigstens einer Artikelbahn.
- Schritt C: Beaufschlagen des Packmittels mit Heizenergie, sodass sich das Packmittel in einem Siegelbereich im Vergleich zu einem davon abweichenden Funktionsbereich (lokal) erwärmt.
- Schritt D: Bilden einer Verpackung um wenigstens einen der Artikel aus dem mit Heizenergie beaufschlagten Packmittel.
- Schritt E: Versiegeln der Verpackung im Siegelbereich des Packmittels.

Die Verarbeitung, insbesondere die Erwärmung, des Packmittels kann nach dem erfindungsgemäßen Verfahren im Vergleich zum Stand der Technik schonender realisiert werden. Der zum Aufschmelzen des Siegelbereichs erforderliche Wärmeeintrag wird nicht alleine bei der Siegelung selbst, z.B. durch die Einwirkung der beheizten Siegelwerkzeuge, realisiert, sondern ergänzend durch eine gezielte, partielle Vorerwärmung des Packmittels.

Siegelwerkzeuge mit beheizten Siegelbacken ermöglichen nur eine zeitlich begrenzte Einwirkzeit auf die Folie. Die Temperaturen werden durch den Folienaufbau von außen nach innen geleitet. Aufgrund der geringen Einwirkzeit ist eine wesentlich höhere Temperierung der Siegelbacken erforderlich, als zum Aufschmelzen der Folien notwendig wäre. Versuche haben gezeigt, dass auch das Vorhandensein einer Sperrschicht (Aluminium) die Wärmeleitung durch den Folienaufbau von der Außenseite zur Innenseite wesentlich beeinflusst und verlangsamt. Die kurzfristige Wärmeeinwirkung resultiert in einer Überhitzung der äußeren Folienseite, bzw. ist zum sicheren Aufschmelzen dickerer Folienverbunde zu gering. Beispielsweise bei Verpackungen für Flowpack treten Undichtigkeiten oftmals im Bereich der Quernaht auf, in welchem die Längsnaht umgelegt wurde. Die zu versiegelnde Foliendicke weist in diesem Bereich einen Lagensprung auf und besteht im Vergleich zu den benachbarten Bereichen anstatt aus zwei, aus mindestens vier Folienlagen. Aufgrund dieser Dickenschwankung sind zur sicheren Versiegelung aller Folienlagen unterschiedliche Wärmeleitungszeiten bis zur Siegelschicht erforderlich. Das erfindungsgemäße Verfahren kann aber auch bei anderen Verpackungsarten als Flowpack zur Vorheizung des Packmittels eingesetzt werden.

Nach dem erfindungsgemäßen Verfahren können auch neuartige Packmittel mit höheren Anforderungen an das Erwärmungsverhalten weiterhin von herkömmlichen Siegelwerkzeugen mit beheizten Siegelbacken, insbesondere mit den Vorteilen der hohen Dynamik des rotativen Siegelprinzips, verarbeitet werden.

Durch die Erhöhung der Grundtemperatur des Packmittels im Zuge der Vorwärmung wird der erforderliche Wärmeeintrag durch das Siegelwerkzeug wesentlich reduziert, um insbesondere auch mit neuartigen Packmitteln weiterhin dichte Siegelnähte zu erzeugen. Somit kann die durch die Folienzusammensetzung gegebene Eigenschaft zur "Frühsiegelung" (Verarbeitung der Folie mit geringeren Siegeltemperaturen) ausgenutzt werden, ohne die Außenseite der Folie zu überhitzen. Des Weiteren können auf diese Weise sensitivere Folien sowie Materialien, welche eine geringere Wärmeleitfähigkeit besitzen und aufgrund dessen eine erhöhte Erwärmungszeit erfordern, verarbeitet werden.

Durch die gezielte, partielle Vorwärmung des Packmittels im Siegelbereich im Vergleich zu dem Funktionsbereich, der mit dem zu verpackenden Artikel in Kontakt gelangt, kann zudem eine übermäßige Wärmeeinwirkung auf den Artikel verhindert werden. Dadurch können Qualitätsveränderungen durch ungewollte Erwärmungen gerade bei temperaturempfindlichen Produkte wie Lebensmitteln oder Süßwaren verhindert werden.

Die Schritte D und/oder E können beispielsweise mit wenigstens einem Rotationskopf ausgeführt werden, insbesondere bei kontinuierlichen Verpackungsverfahren und - vorrichtungen, welche die Packung durch Vereinigung von mindestens einem Packmittelabschnitt sowie mindestens einem Artikel herstellen. Ein solcher Rotationskopf ist um eine Drehachse drehbar und umfasst eine Vielzahl von Arbeitsstationen mit jeweils entsprechenden Halteorgangen für wenigstens einen Artikel und ggf. das dem Artikel zugeordnete Packmittel. Entsprechende Rotationsköpfe sind beispielsweise aus der DE 10 2018 209 185 bekannt, deren Inhalte hierin durch Bezugnahme aufgenommen sind. Bei Flowpack-Verpackungen, wie in den angehängten Figuren abgebildet, werden vorzugsweise andere, bspw. stationäre bzw. nicht-rotierende Verpackungs- und Versiegelungseinrichtungen eingesetzt.

Vorteilhafte Weiterbildungen der Erfindung sind Gegenstände der abhängigen Ansprüche.

Es kann von Vorteil sein, wenn Schritt A wenigstens einen der folgenden Teilschritte umfasst:
- Teilschritt A-1: Bereitstellen des Packmittels mit wenigstens einer artikelspezifischen Siegelmaske. Die Siegelmaske entspricht der siegelfähigen Fläche des Packmittels und vorzugsweise auch dem Siegelbereich. Die Siegelmaske kann sich aber auch den Siegelbereich hinaus in den Funktionsbereich des Packmittels erstrecken und ist demnach nicht zwingend deckungsgleich mit dem Siegelbereich. Die Siegelmaske umfasst vorzugsweise wenigstens zwei voneinander beabstandete Längssiegelflächen und wenigstens zwei voneinander beabstandete Quersiegelflächen. Mehrere Siegelflächen können auf derselben oder auf unterschiedlichen Seiten des Packmittels angeordnet sein. Eine (z.B. rechteckige) nicht-siegelfähige Funktionsfläche grenzt vorzugsweise an wenigstens eine oder alle Siegelflächen an. Die Siegelflächen überlappen vorzugsweise nicht, sondern sind voneinander beabstandet oder grenzen aneinander an. Die Siegelflächen können beispielsweise einen geschlossenen Rahmen um die wenigstens eine Funktionsfläche bilden. Die Siegelfläche erstreckt sich vorzugsweise an einem Längsrand oder Querrand des Packmittels. Das Packmittel besteht vorzugsweise aus Papier und/oder Kunststoff und/oder Materialverbunden mit oder ohne metallische Zwischenschicht.
- Teilschritt A-2: Abrollen des Packmittels von einer Packmittelrolle. Mit einer Packmittelrolle kann eine große Menge an Packmittel bereitgestellt und komfortabel der nachfolgenden Verarbeitung zugeführt werden.
- Teilschritt A-3: Fördern des Packmittels in einer Förderrichtung entlang einer Packmittelbahn, vorzugsweise am Strang, bevorzugt derart, dass wenigstens zwei voneinander beabstandete Längssiegelflächen parallel zur Förderrichtung ausgerichtet sind und/oder wenigstens zwei voneinander beabstandete Quersiegelflächen quer zur Förderrichtung ausgerichtet sind, wobei sich die Längssiegelflächen bevorzugt entlang der Längsränder des Packmittels erstrecken und/oder die Quersiegelflächen von einem bis zum anderen Längsrand des Packmittels erstrecken. Die Förderung des Packmittels entlang einer Förderrichtung, insbesondere am Strang, erleichtert die Handhabung des Packmittels und die Zuführung zu den einzelnen Arbeitsschritten. Diese Siegelflächen überdecken vorzugsweise den gesamten Siegelbereich, können sich aber auch über den Siegelbereich hinaus in den Funktionsbereich des Packmittels erstrecken.

- Teilschritt A-4: Spannen des Packmittels in Förderrichtung, vorzugsweise über wenigstens eine Umlenkrolle, bevorzugt über zwei Umlenkrollen, zwischen denen eine Heizeinrichtung zur Beaufschlagung des Packmittels mit Heizenergie angeordnet ist, sodass sich das Packmittel im Wirkungsbereich der Heizeinrichtung zumindest abschnittsweise in einer Ebene erstreckt oder das Packmittel zumindest abschnittsweise eine Zylindermantelfläche bildet. Dadurch kann das Packmittel besonders gleichmäßig erwärmt werden.
- Teilschnitt A-5: Vereinzeln des Packmittels, vorzugsweise von einer Packmittelrolle, vor oder nach der Zuordnung zu dem Artikel. Dadurch können die vereinzelten Packmittelabschnitte artikelspezifisch konfektioniert werden.

Es kann nützlich sein, wenn Schritt B wenigstens einen der folgenden Teilschritte umfasst:
- Teilschritt B-1: Vereinzeln der Artikel aus einem Artikelvorrat.
- Teilschritt B-2: Fördern der Artikel entlang der Artikelbahn.
- Teilschritt B-3: Gruppieren vereinzelter Artikel zu einer Artikelgruppe, vorzugsweise durch Erzeugen eines Produktstaus entlang der Artikelbahn.

Nach dem erfindungsgemäßen Verfahren lassen sich einzelne Artikel oder mehrere Artikel in Artikelgruppen in einem vereinzelten Packmittel verpacken und versiegeln.

Es kann sich als praktisch erweisen, wenn Schritt C wenigstens einen der folgenden Teilschritte umfasst:
- Teilschritt C-1: Anordnen des Packmittels im Wirkungsbereich einer Heizeinrichtung, sodass die Heizeinrichtung das Packmittel durch Wärmeleitung (Konduktion) und/oder Wärmestrahlung (Radiation) und/oder Konvektion mit Heizenergie beaufschlägt. Bei direktem Kontakt zwischen Packmittel und Heizeinrichtung wird ein Großteil der Heizenergie durch Wärmeleitung bzw. Konduktion übertragen. Bei gro-ßen Temperaturdifferenzen zwischen dem Packmittel und der Heizeinrichtung werden auch erhebliche Wärmemengen durch Strahlung (Radiation) transferiert. Eine Energieübertragung mittels Konvektion, zum Beispiel durch Heißluft, könnte optional stattfinden. Maßgeblich ist, dass eine gezielte Wärmeübertragung von der Heizeinrichtung auf den Siegelbereich des Packmittels erfolgt.
- Teilschritt C-2: Ausrichten der Heizeinrichtung zum Packmittel oder Ausrichten des Packmittels zur Heizeinrichtung anhand von wenigstens einer Referenzmarkierung des Packmittels, vorzugsweise anhand von wenigstens einer Referenzmarkierung für jeden einem Artikel zuordenbaren Packmittelabschnitt. Eine derartige Referenzmarkierung befindet sich vorzugsweise an einer festgelegten Stelle eines Packmittels bzw. jedes zu vereinzelnden Packmittelabschnitts. Über die Referenzmarkierung kann eine Positionsbestimmung des Packmittels im Verhältnis zur Heizeinrichtung stattfinden. Diese Referenzmarkierung kann Grundlage für die Betätigung bzw. Steuerung der Heizeinrichtung darstellen.
- Teilschritt C-3: Erzeugen eines auf den Siegelbereich abgestimmten Heizmusters mittels einer Heizeinrichtung, um das Packmittel im Siegelbereich im Vergleich zu dem Funktionsbereich gezielt zu erwärmen, vorzugsweise ohne das Packmittel im Funktionsbereich zu erwärmen.
- Teilschritt C-4: Bewegen und/oder Verändern des Heizmusters im Einklang mit einer Bewegung des Packmittels, vorzugsweise im Einklang mit einer Bewegung wenigstens einer Referenzmarkierung auf dem Packmittel, bevorzugt in Förderrichtung des Packmittels, besonders bevorzugt mit gleicher Geschwindigkeit wie das Packmittel. Dadurch muss das einmal erzeugte, artikelspezifische Heizmuster, nicht verändert werden, sondern kann entsprechend einer Bewegung des Packmittels diesem nachgeführt werden, um das Packmittel gezielt im Siegelbereich vorzuwärmen. Die Nachführung des Heizmusters entsprechend der Bewegung des Packmittels kann über die Referenzmarkierung erfolgen. Dabei kann die Steuerung der Heizeinrichtung anhand der Referenzmarkierung des Packmittels erkennen, wie sich die Position des Siegelbereichs im Einklang mit der Bewegung des Packmittels verändert. Dadurch kann die Heizeinrichtung entsprechend gesteuert werden, um Heizenergie dynamisch und zielgerichtet auf den Siegelbereich zu lenken.
- Teilschritt C-5: Beaufschlagen des Packmittels mit Heizenergie von einer Seite oder von beiden Seiten des Packmittels. Bei einer einseitigen Erwärmung des Packmittels gestaltet sich die Konstruktion der Heizeinrichtung einfacher. Mit beidseitiger Erwärmung des Packmittels lässt sich die erforderliche Heizenergie zur Erwärmung des Packmittels schneller auf das Packmittel übertragen. Idealerweise wird das Packmittel von der Seite, die im bestimmungsgemäßen Verpackungszustand des Artikels dem Artikel zugewandt ist, mit Heizenergie beaufschlagt.

Es kann sinnvoll sein, wenn Schritt D wenigstens einen der folgenden Teilschritte umfasst:
- Teilschritt D-1: Zuordnen des Packmittels zu dem wenigstens einen Artikel, vorzugsweise derart, dass eine siegelfähige Seite des Packmittels zu dem Artikel weist. Dadurch kann der Artikel besonders einfach durch Umschließung des Artikels mit Packmittel verpackt werden.
- Teilschritt D-2: Anordnen des Packmittels in Schlauchform um den wenigstens einen Artikel. Durch Ausbildung eines Packmittelschlauchs um den Artikel erleichtert sich die Faltung und Siegelung des Packmittels.

Es kann nützlich sein, wenn Schritt E wenigstens einen der folgenden Teilschritte umfasst:
- Teilschritt E-1: Bilden einer Siegelnaht in Form einer Flossennaht durch Überdeckung zweier auf derselben Seite des Packmittels angeordneter Siegelflächen. Bei einer Flossennaht erfolgt die Nahtbildung durch Versiegelung zweier Folieninnenseiten, in der Regel unter Ausbildung einer vom Artikel vorstehenden Flosse. Diese Flosse kann in einem nachstehenden Bearbeitungsschritt gegen den Artikel gefaltet werden. Bei der Ausbildung von Schlauchbeutelverpackungen (Flowpack) werden üblicherweise die Längssiegelnaht und gegebenenfalls beide Quersiegelnähte als Flossennähte ausgebildet.
- Teilschritt E-2: Bilden einer Siegelnaht in Form einer Überlappnaht durch Überdeckung zweier auf unterschiedlichen Seiten des Packmittels angeordneter Siegelflächen. Bei einer Überlappnaht erfolgt die Nahtbildung durch Versiegelung der Folieninnenseite mit einer Folienaußenseite. Bei der Ausbildung einer Überlappnaht kann das Packmittel den Artikel ein- oder mehrfach umwickeln und dadurch besonders konturnah umgeben. Bei der Überlappnaht befinden sich Siegelflächen auf unterschiedlichen Seiten des Packmittels.
- Teilschritt E-3: Schließen der Verpackung um jeden einzelnen Artikel oder um eine Artikelgruppe aus mindestens zwei Artikeln, vorzugsweise derart, dass der Artikel das Packmittel ausschließlich im Funktionsbereich kontaktiert. Demnach können mit einem vereinzelten Packmittel nach dem erfindungsgemäßen Verfahren sowohl einzelne Artikel als auch Artikelgruppen verpackt werden.
- Teilschritt E-4: Siegeln des Packmittels im Bereich zweier sich überdeckender Siegelflächen. Die Siegelung erfolgt demnach vorzugsweise ausschließlich zwischen zwei sich überdeckenden Siegelflächen.

Ein weiterer Aspekt der Erfindung betrifft eine Vorrichtung zum Verpacken und Versiegeln kleinstückiger Artikel, (insbesondere Lebensmittel oder Verbrauchsgüter) wie Süßwaren, Brühtabletten oder Waschtabs, in heißsiegelfähigem Packmittel, vorzugsweise nach dem Verfahren gemäß einem der Ansprüche 1 bis 6, umfassend:
- Eine Packmittel-Bereitstellungseinrichtung zum Bereitstellen des heißsiegelfähigen Packmittels. Die Packmittel-Bereitstellungseinrichtung ist vorzugsweise ausgebildet, um das Packmittel von einer Packmittelrolle (Bobine) am Strang abzurollen, in einer Förderrichtung zu fördern und den folgenden Arbeitsstationen bzw. Einrichtungen zuzuführen.
- Eine Artikel-Bereitstellungseinrichtung zum Bereitstellen der kleinstückigen Artikel, vorzugsweise in Reihe entlang wenigstens einer Artikelbahn. Mit dieser Einrichtung werden Artikel zur Zusammenführung mit dem Packmittel entsprechend positioniert.
- Eine Heizeinrichtung zum Beaufschlagen des Packmittels mit Heizenergie, sodass sich das Packmittel in einem Siegelbereich im Vergleich zu einem davon abweichenden Funktionsbereich (lokal) erwärmt.
- Eine Verpackungseinrichtung zum Bilden einer Verpackung um wenigstens einen der Artikel aus dem mit Heizenergie beaufschlagten Packmittel. Die Verpackungseinrichtung ist insbesondere bei kontinuierlichen Verpackungsverfahren, welche die Packung durch Vereinigung von mindestens einem Packmittelabschnitt sowie mindestens einem Artikel herstellen, beispielsweise ein Rotationskopf mit einer Mehrzahl von Arbeitsstationen und entsprechenden Halteorganen zur Aufnahme jeweils wenigstens eines Artikels und des entsprechenden Packmittels. Ein solcher Rotationskopf ist z.B. in der DE 10 2018 209 185 offenbart. Für die Herstellung von Flowpacks sind keine rotativen Köpfe erforderlich.
- Eine Versiegelungseinrichtung zum Versiegeln der Verpackung im Siegelbereich des Packmittels. Die Versiegelungseinrichtung ist beispielsweise als Rotationskopf bzw. Siegelkopf mit einer Mehrzahl von Arbeitsstationen und entsprechenden Halteorganen zur Aufnahme jeweils wenigstens eines Artikels und zur Siegelung des den Artikel verpackenden Packmittels, zum Beispiel in Gestalt von Siegelbacken, wie in der DE 10 2018 209 185 offenbart, ausgebildet. Für die Herstellung von Flowpacks sind keine rotativen Köpfe erforderlich.

Es kann von Vorteil sein, wenn die Heizeinrichtung ausgebildet ist, um ein artikel- bzw. packmittelspezifisches Heizmuster zu erzeugen, wobei das Heizmuster vorzugsweise auf den Siegelbereich abgestimmt ist, wobei das Heizmuster bevorzugt im Einklang mit einer Bewegung des Packmittels bewegbar und/oder veränderbar ist. Mit einer derartigen Heizeinrichtung kann eine zielgerichtete Erwärmung des Siegelbereichs im Vergleich zu dem Funktionsbereich des Packmittels erfolgen.

Es kann sich als hilfreich erweisen, wenn die Heizeinrichtung wenigstens eine stationäre Heizeinheit aufweist, wobei das Packmittel bei der Beaufschlagung mit Heizenergie im Vergleich zu der stationären Heizeinheit steht oder sich bewegt. Bei einer stationären Heizeinrichtung entfällt die Mechanik, die zur Bewegung der Heizeinrichtung erforderlich wäre. Bei kontinuierlichen Verpackungsverfahren wird das Packmittel den zu verpackenden Artikeln kontinuierlich am Strang zugeführt. Dabei befindet sich das Packmittel nur für einen sehr kurzen Zeitraum (Einwirkzeit) im Wirkungsbereich einer stationären Heizeinrichtung. Während dieser Einwirkzeit muss die zur Vorwärmung des Packmittels erforderliche Heizenergie (ambulant) auf das Packmittel übertragen werden. Dieser Zeitraum kann beispielsweise durch die Veränderung der Länge der Heizeinrichtung entlang der Förderrichtung des Packmittels angepasst werden.

Es kann praktisch sein, wenn die Heizeinrichtung wenigstens eine bewegbare Heizeinheit aufweist, die derart konfiguriert ist, um sich während der Beaufschlagung des Packmittels mit Heizenergie zu bewegen, vorzugsweise in Förderrichtung des Packmittels, bevorzugt translatorisch oder rotatorisch, besonders bevorzugt mit einer Geschwindigkeit, die gleich ist wie oder größer ist als die Fördergeschwindigkeit des Packmittels in Förderrichtung. Mit einer bewegbaren Heizeinheit kann die Einwirkzeit auf das Packmittel, bzw. der Zeitraum, in welchem sich das Packmittel im Wirkungsbereich der Heizeinrichtung befindet, gegenüber der stationären Heizeinheit deutlich verlängert werden. Vorzugsweise handelt es sich um eine zyklisch oder kontinuierlich bewegbare Heizeinheit, wobei die Heizeinheit eine zyklische Bewegung wiederholt, bevorzugt für jeden zu vereinzelnden Packmittelabschnitt.

Es kann vorteilhaft sein, wenn die Heizeinrichtung wenigstens eine variable Heizeinheit aufweist, die eine Mehrzahl separat beheizbarer und/oder separat verstellbarer Heizabschnitte umfasst, wobei die Heizabschnitte vorzugsweise matrixförmig angeordnet sind, bevorzugt in einer Ebene oder in einer rotationssymmetrischen Mantelfläche (z.B. Zylinder, Kegel, Torus). Eine variable Heizeinheit kann die Vorteile einer stationären Heizeinheit und einer bewegbaren Heizeinheit ideal kombinieren. Anstelle einer mechanischen Bewegung von Heizabschnitten kann hier ein unterschiedliches Heizmuster beispielsweise durch Ansteuerung unterschiedlicher Heizkreise in verschiedenen Heizabschnitten erzeugt werden. Ein derartiges System ist aufgrund der geringen Wärmekapazität und der dadurch entfallenden Trägheit flexibler und möglicherweise schneller anpassbar an eine Bewegung des Packmittels oder an unterschiedliche Arten bzw. Formen von Packmittel. Die variable Heizeinheit kann beispielsweise als Matrix-Heizeinrichtung mit einer Vielzahl von matrixförmig in einer Ebene oder in einer rotationssymmetrischen Mantelfläche angeordneten, separat beheizbaren Heizabschnitten ausgebildet sein (z.B. mehr als 10, 20, 30, 40 oder 50 und bis zu 100 Spalten sowie mehr als 10, 20, 30, 40 oder 50 und bis zu 100 Zeilen). Die Anzahl der Heizabschnitte in Förderrichtung ist bei einer solchen Matrix-Heizeinrichtung vorzugsweise größer als quer zur Förderrichtung des Packmittels. Durch entsprechende Ansteuerung der Heizabschnitte kann eine Vielzahl verschiedener Heizmuster erzeugt werden. Die verschiedenen Konzepte von Heizeinrichtungen sind kombinierbar. So kann eine stationäre oder bewegbare Heizeinheit gleichzeitig als variable Heizeinheit ausgebildet sein.

Es kann nützlich sein, wenn die Heizeinrichtung eine sich um eine Drehachse drehbare Heiztrommel aufweist, wobei die Heiztrommel zwei entlang ihrer Drehachse beabstandete, vorzugsweise ringförmige Heizabschnitte, bevorzugt für zwei Längssiegelflächen des Packmittels aufweist, und/oder wobei die Heiztrommel wenigstens einen sich parallel zur Drehachse erstreckenden, vorzugsweise balkenförmigen Heizabschnitt, bevorzugt für zwei Quersiegelflächen des Packmittels aufweist. Mit der Heiztrommel kann auf eine einfache Weise eine bewegbare und gegebenenfalls variable Heizeinheit umgesetzt werden. Die Heiztrommel kann beispielsweise auch als Matrix-Heiztrommel ausgebildet sein und eine Vielzahl von matrixförmig in ihrer Mantelfläche angeordneten, separat beheizbaren Heizabschnitten aufweisen.

Es kann sich als praktisch erweisen, wenn die Heizeinrichtung in Abhängigkeit von wenigstens einer Referenzmarkierung auf dem Packmittel steuerbar ist, wobei vorzugsweise die Heizeinrichtung in Abhängigkeit von wenigstens einer Referenzmarkierung auf dem Packmittel bewegbar ist, wobei bevorzugt wenigstens ein Heizabschnitt der Heizeinrichtung in Abhängigkeit von wenigstens einer Referenzmarkierung auf dem Packmittel bewegbar und/oder beheizbar ist. Die Referenzmarkierung auf dem Packmittel erleichtert die zielgerichtete Beaufschlagung des Siegelbereichs des Packmittels mit Heizenergie unter Vermeidung einer unbeabsichtigten Erwärmung des Funktionsbereichs. Vorzugsweise weist die Heizeinrichtung eine Einrichtung zur Erfassung der Referenzmarkierung des Packmittels (Erfassungseinrichtung) auf. Diese Erfassungseinrichtung ist vorzugsweise ausgebildet, um die Position und/oder Orientierung der Referenzmarkierung des Packmittels im Verhältnis zur Heizeinrichtung zu erfassen, z.B. optisch, magnetisch, elektronisch. Die Steuerung der Heizeinrichtung ist vorzugsweise ausgebildet, um die Heizeinrichtung in Abhängigkeit von der erfassten Position und/oder Orientierung der Referenzmarkierung des Packmittels anzusteuern.

Es kann hilfreich sein, wenn die Heizeinrichtung derart ausgebildet ist, um eine Vielzahl identischer Abschnitte des Packmittels nach einem identischen Heizmuster mit Heizenergie zu beaufschlagen, vorzugsweise im kontinuierlichen oder diskontinuierlichen Verfahren. Dadurch kann eine Vielzahl von Packmittelabschnitten mit wiederholbaren Ergebnissen partiell vorgewärmt werden.

Ein nebengeordneter Aspekt der vorliegenden Erfindung betrifft ein Packmittel, mit wenigstens einer sich abschnittsweise über das Packmittel erstreckenden (siegelfähigen) Siegelfläche und mit wenigstens einer sich abschnittsweise über das Packmittel erstreckenden (nicht-siegelfähigen) Funktionsfläche außerhalb der Siegelfläche, wobei das Packmittel lediglich im Bereich der Siegelfläche thermisch aktivierbar ist, vorzugsweise durch induktiv erwärmbare und/oder wärmespeichernde Zuschlagstoffe, vorzugsweise aus Metall. Ein solches Packmittel kann auch bei flächig gleichmäßiger Energiezufuhr nur im Bereich der Siegelfläche Wärme erzeugen bzw. aufnehmen. Durch gezielte Erwärmung des Packmittels im Siegelbereich, der vorzugsweise dem Bereich der wenigstens einen Siegelfläche entspricht, im Vergleich zu einem vom Siegelbereich abweichenden Funktionsbereich, der vorzugsweise einer von der Siegelfläche abweichenden Funktionsfläche entspricht, wird das Packmittel im Einklang mit der Erfindung partiell vorgewärmt.

### Begriffe und Definitionen

### Artikel

Der Artikel ist beispielsweise exakt oder im Wesentlichen quaderförmig oder würfelförmig oder kugelförmig ausgebildet. Die Kantenlänge oder der Durchmesser des Artikels liegt vorzugsweise im Bereich von 0,2 cm bis 25 cm, bevorzugt im Bereich von 0,5 bis 22 cm. Der Formatbereich eines Artikels, insbesondere zur Verarbeitung mit einer Flowpackmaschine, erstreckt sich beispielsweise wie folgt: Länge: 15 bis 220 mm, Breite: 12 bis 120 mm, Höhe: 4 bis 30 mm. Die Formatbereiche eines Artikels für andere Verpackungsmaschinen befinden sich in ähnlichem oder einem eingeschränkten Größenbereich.

### Packmittel

Das Packmittel ist vorzugsweise ein oder mehrschichtig aufgebaut und bevorzugt als Folie ausgebildet. Vorzugsweise besteht wenigstens eine Schicht des Packmittels aus Papier und/oder Kunststoff und/oder Metall. Die Metallschicht kann insbesondere als Sperrschicht dienen. Idealerweise ist das Packmittel zumindest teilweise oder vollständig aus nachwachsenden und/oder biologisch abbaubaren Rohstoffen hergestellt. Die Erfindung ist aber ausdrücklich nicht nur an die Verwendung neuartiger Packmittel gekoppelt, sondern kann zur Verarbeitung beliebiger, heißsiegelfähiger Packmittel Anwendung finden.

### Siegelbereich

Im Rahmen der Erfindung wird ausschließlich der Bereich des Packmittels, der später die Siegelnähte bildet, als Siegelbereich bezeichnet. Eine siegelfähige Fläche des Packmittels, die auch als Siegelfläche oder Siegelmaske bezeichnet wird, ist demnach nicht zwingend nur auf den Siegelbereich begrenzt. Erfindungsgemäß wird der Siegelbereich des Packmittels gezielt und lokal erwärmt, also der erforderliche Bereich der siegelfähigen Fläche, der später die Siegelnähte bildet. Das Packmittel kann über den Siegelbereich hinausüber siegelfähig sein, z.B. über die gesamte Innenfläche.

### Siegelfläche

Im Bereich der Siegelfläche ist das Packmittel siegelfähig und thermisch aktivierbar. Vorzugsweise weist das Packmittel im Bereich der Siegelfläche eine thermisch aktivierbare, bevorzugt schmelzfähige Beschichtung auf. Durch thermische Aktivierung wird das Packmittel im Bereich der Siegelfläche vorzugsweise aufgeschmolzen. Das Packmittel umfasst vorzugsweise jeweils zwei korrespondierende Siegelflächen zur Ausbildung einer Siegelnaht. Die beiden korrespondierenden Siegelflächen zur Ausbildung einer Siegelnaht befinden sich vorzugsweise an entgegengesetzten Enden bzw. Rändern eines Packmittelabschnitts, z.B. die Längssiegelflächen an den Längsrändern und/oder die Quersiegelflächen an den Querrändern. Die verwendeten Packmittel für Flowpack (Flowpack-Folien) sind im Allgemeinen auf der dem Artikel zugewandten Seite vollflächig siegelfähig, d.h., der Siegelbereich entspricht einem Teil der Siegelfläche.

### Siegelnaht

In einem thermisch aktivierten Zustand können vorzugsweise zwei korrespondierende Siegelflächen in Kontakt bzw. zur Deckung gebracht werden, um durch Abkühlen bzw. Erstarren eine (stoffschlüssig verbundene) gesiegelte Naht, die sog. Siegelnaht zu bilden. Die Siegelnaht besteht idealerweise aus einem durchgängigen Material, nämlich den erstarrten und homogen verbundenen Schmelzen der in Kontakt bzw. zur Deckung gebracht Siegelflächen. Zur Ausbildung einer Längssiegelnaht werden vorzugsweise die beiden korrespondierenden Längssiegelflächen im thermisch aktivierten Zustand zur Deckung gebracht und anschließend abgekühlt bzw. ausgehärtet. Zur Ausbildung einer Quersiegelnaht werden vorzugsweise die beiden korrespondierenden Quersiegelflächen im thermisch aktivierten Zustand zur Deckung gebracht und anschließend abgekühlt bzw. ausgehärtet.

### Funktionsbereich, Funktionsfläche

Im Rahmen der Erfindung wird der Bereich des Packmittels, der im versiegelten Zustand des Packmittels keine Siegelnaht bildet, als Funktionsbereich bezeichnet. Der Funktionsbereich kann auch ein an sich siegelfähiger Bereich des Packmittels sein. Erfindungsgemäß wird das Packmittel im Siegelbereich stärker als im Funktionsbereich erwärmt. Die Funktionsfläche ist üblicherweise deckungsgleich mit dem Funktionsbereich und beschreibt den nicht-siegelfähigen Bereich des Packmittels abweichend von der siegelfähigen Siegelfläche. Im Bereich der Funktionsfläche ist das Packmittel nicht siegelfähig und vorzugsweise nicht thermisch aktivierbar und weist insbesondere keine thermisch aktivierbare Beschichtung auf. Die Funktionsfläche ist bestimmungsgemäß zur Kontaktierung des zu verpackenden Artikels im verpackten Zustand vorgesehen. Das Vorhandensein von direkt abgegrenzten Bereichen, nämlich Siegelfläche und Funktionsfläche bzw. siegelfähigen und nicht-siegelfähigen Flächen, des Packmittels ist nicht erforderlich. Es können demnach auch heißsiegelfähige Packmittel verwendet werden, deren Innenseiten vollflächig siegelfähig sind.

### Partielles Vorwärmen des Siegelbereichs im Vergleich zum Funktionsbereich

Erfindungsgemäß wird das Packmittel im Siegelbereich *im Vergleich* zu dem Funktionsbereich erwärmt. Demnach ist die Temperaturdifferenz zwischen Endtemperatur (nach dem Verlassen des Wirkungsbereichs der Heizeinrichtung) und Ausgangstemperatur (vor dem Eintritt in den Wirkungsbereich der Heizeinrichtung) im Siegelbereich größer als im Funktionsbereich.

### Heizmuster

Der Begriff Heizmuster ist in diesem Zusammenhang abstrakt zu verstehen, je nach dem gewählten Wärmeübertragungsmechanismus Wärmeleitung und/oder Wärmestrahlung und/oder Konvektion. Der Begriff Heizmuster bezeichnet in diesem Zusammenhang eine Konfiguration der Heizeinrichtung, in welcher die Heizeinrichtung dem Siegelbereich des Packmittels Heizenergie gezielt zuführt. Die Energieerzeugung der Heizeinrichtung und/oder die Energieübertragung von der Heizeinrichtung auf das Packmittel ist/sind vorzugsweise flächenspezifisch inhomogen. Dabei wird dem Siegelbereich eine größere (flächenspezifische) Heizenergie zugeführt als dem Funktionsbereich, sodass sich der Siegelbereich im Vergleich zu dem Funktionsbereich (stärker) erwärmt. Vorzugsweise wird dem Funktionsbereich mit der Heizeinrichtung keine Energie zugeführt wird, sodass sich der Funktionsbereich im Vergleich zu seiner Ausgangstemperatur, mit welcher er in den Wirkungsbereich der Heizeinrichtung gelangt, nicht erwärmt. Vorzugsweise wird somit die gesamte Heizenergie bzw. Heizleistung der Heizeinrichtung ausschließlich zur Erwärmung des Siegelbereichs eingesetzt. Demnach steigt die Temperatur im Siegelbereich im Vergleich zu der Temperatur, mit welcher er in den Wirkungsbereich der Heizeinrichtung gelangt, an, zumindest stärker als die Temperatur im Funktionsbereich. Die Erzeugung des Heizmusters und/oder dessen Veränderung kann/können über die Referenzmarkierung des Packmittels gesteuert werden. Anhand der Referenzmarkierung des Packmittels kann die Steuerung der Heizeinrichtung erkennen, wo sich am Packmittel der Siegelbereich und der Funktionsbereich befinden. Dadurch kann die Heizeinrichtung entsprechend gesteuert werden, um zielgerichtet den Siegelbereich stärker als den Funktionsbereich zu erwärmen.

### Kurze Beschreibung der Figuren

Es zeigen:

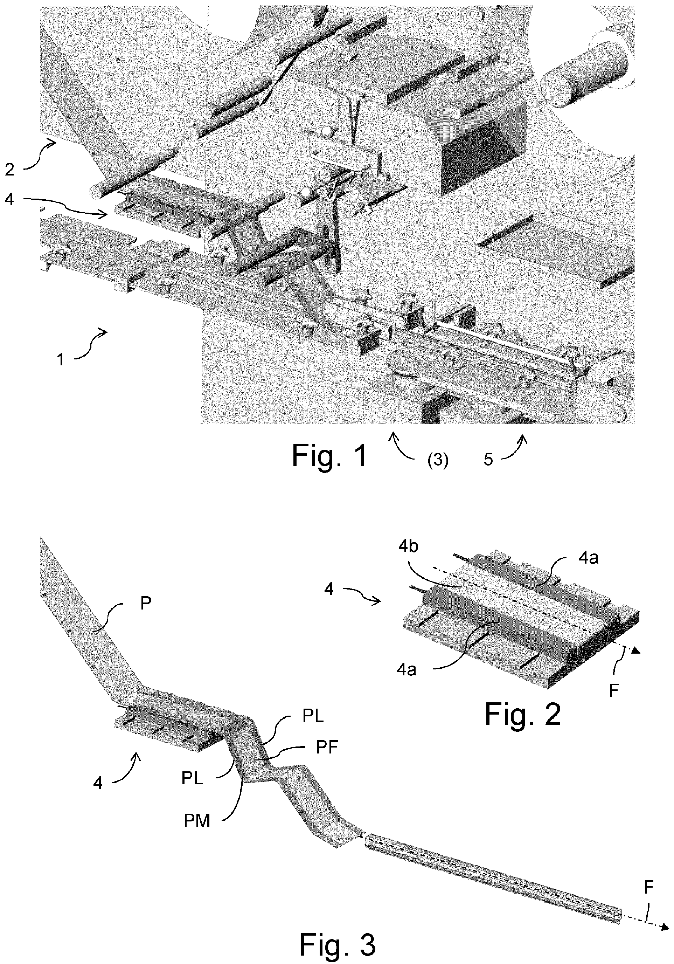

Fig. 1 eine Darstellung der erfindungsgemäßen Verpackungs- und Versiegelungsvorrichtung nach dem ersten Ausführungsbeispiel der Erfindung, wobei die Heizeinrichtung als Heizeinheit eine ebene Heizplatte mit zwei sich parallel zur Förderrichtung des Packmittels erstreckenden und quer zur Förderrichtung des Packmittels beabstandeten Heizabschnitten aufweist, um das Packmittel im Siegelbereich, umfassend die quer zur Förderrichtung des Packmittels voneinander beabstandeten Längssiegelflächen an den Längsrandseiten des Packmittels, unter Aussparung des Funktionsbereichs, entsprechend der zwischenliegenden Funktionsfläche, vor der Zuordnung zu dem zu verpackenden Artikel gezielt mit Heizenergie zu beaufschlagen, während sich das Packmittel im Wirkungsbereich der Heizeinrichtung befindet und dabei die Heizplatte während einer kontinuierlichen Förderung überstreift.
Fig. 2 eine Darstellung der Heizeinrichtung der erfindungsgemäßen Verpackungs- und Versiegelungsvorrichtung gemäß Figur 1 in isolierter Ansicht.
Fig. 3 eine Darstellung des Erwärmungsprofils auf dem Packmittel vor und nach der Heizeinrichtung gemäß Figur 1 und 2.

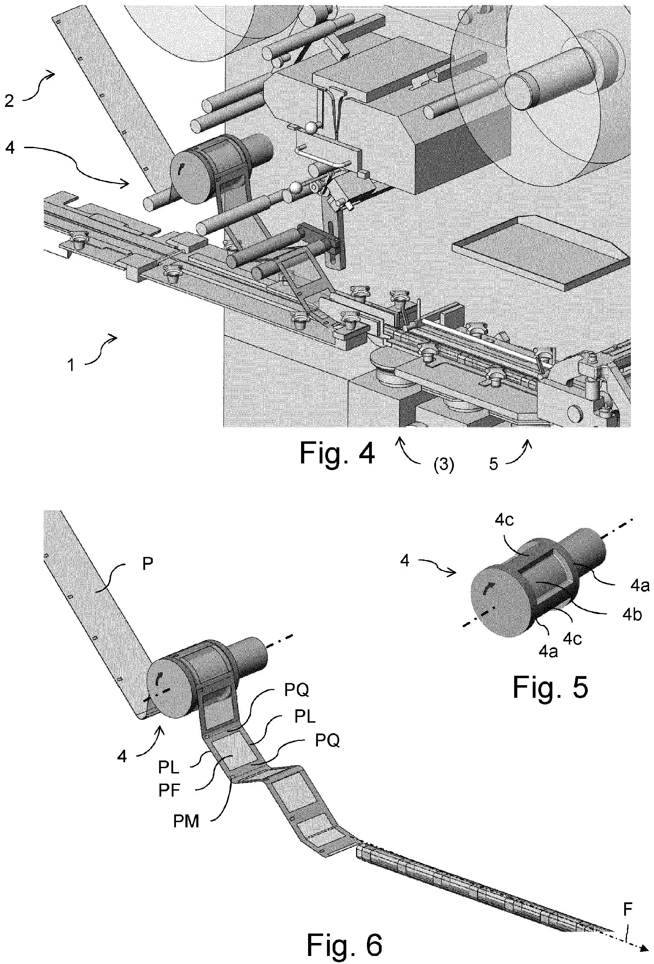

Fig. 4 eine Darstellung der erfindungsgemäßen Verpackungs- und Versiegelungsvorrichtung nach dem zweiten Ausführungsbeispiel der Erfindung, wobei die Heizeinrichtung als Heizeinheit eine sich um eine Drehachse drehende Heiztrommel mit zwei quer zur Förderrichtung des Packmittels beabstandeten, ring(abschnitts)förmigen Heizabschnitten zur Beheizung der Längssiegelflächen des Packmittels und insgesamt vier sich quer zur Förderrichtung des Packmittels erstreckenden, balkenförmigen Heizabschnitten zur Beheizung der Quersiegelflächen des Packmittels aufweist, wobei das Packmittel mittels zweier vor- bzw. nachgeschalteter Umlenkrollen über die Heiztrommel derart gespannt ist, dass das Packmittel umfangsseitig an der sich drehenden Heiztrommel anliegt und schlupffrei an dieser abrollt, sodass das Packmittel im Siegelbereich, umfassend die Längs- und Quersiegelflächen des Packmittels, unter Aussparung des Funktionsbereichs, umfassend die zwischenliegende Funktionsfläche, gezielt mit Heizenergie beaufschlagt wird.
Fig. 5 eine Darstellung der Heizeinrichtung der erfindungsgemäßen Verpackungs- und Versiegelungsvorrichtung gemäß Figur 4 in isolierter Ansicht.
Fig. 6 eine Darstellung des Erwärmungsprofils auf dem Packmittel vor und nach der Heizeinrichtung gemäß Figur 4 und 5.

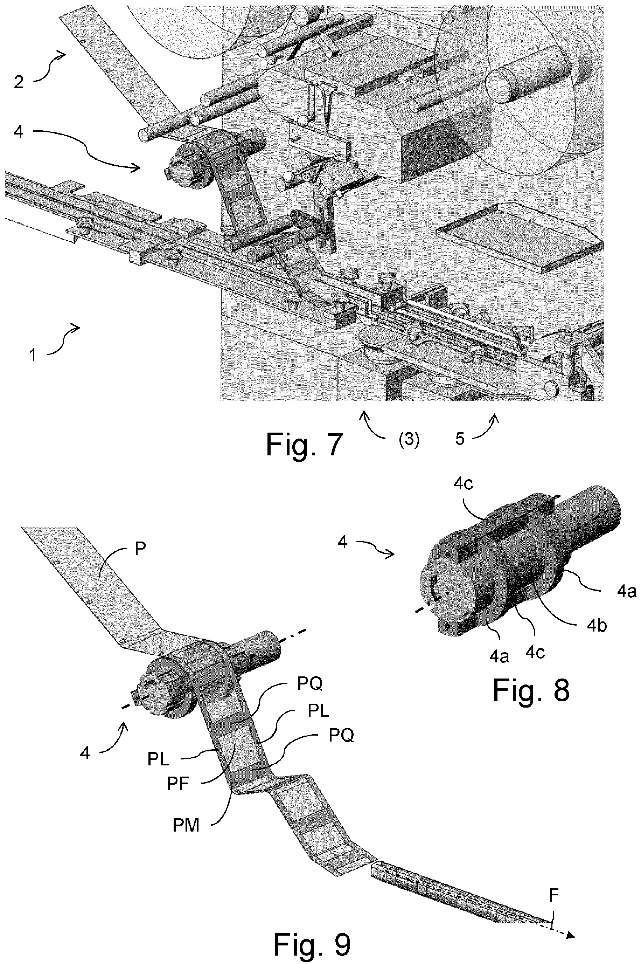

Fig. 7 eine Darstellung der erfindungsgemäßen Verpackungs- und Versiegelungsvorrichtung nach dem dritten Ausführungsbeispiel der Erfindung, wobei die Heizeinrichtung als Heizeinheit eine sich um eine Drehachse drehende Heiztrommel mit zwei quer zur Förderrichtung des Packmittels beabstandeten und quer zur Förderrichtung des Packmittels verstellbaren, ringabschnittsförmigen Heizabschnitten zur Beheizung der Längssiegelflächen des Packmittels und insgesamt zwei quer zur Förderrichtung des Packmittels erstreckenden, balkenförmigen Heizabschnitten zur Beheizung der Quersiegelflächen des Packmittels aufweist, wobei das Packmittel mittels zweier vor- bzw. nachgeschalteter Umlenkrollen über die Heiztrommel derart gespannt ist, dass das Packmittel an der sich drehenden Heiztrommel anliegt und phasenweise schlupffrei, phasenweise mit Geschwindigkeitsdifferenz an dieser abrollt, sodass das Packmittel im Siegelbereich, umfassend die Längs- und Quersiegelflächen des Packmittels, unter Anpassung an den Abstand der Längs- und Quersiegelflächen des Packmittels sowie unter Aussparung des Funktionsbereichs, umfassend die zwischenliegende Funktionsfläche, gezielt mit Heizenergie beaufschlagt wird.
Fig. 8 eine Darstellung der Heizeinrichtung der erfindungsgemäßen Verpackungs- und Versiegelungsvorrichtung gemäß Figur 7 in isolierter Ansicht.
Fig. 9 eine Darstellung des Erwärmungsprofils auf dem Packmittel vor und nach der Heizeinrichtung gemäß Figur 7 und 8.

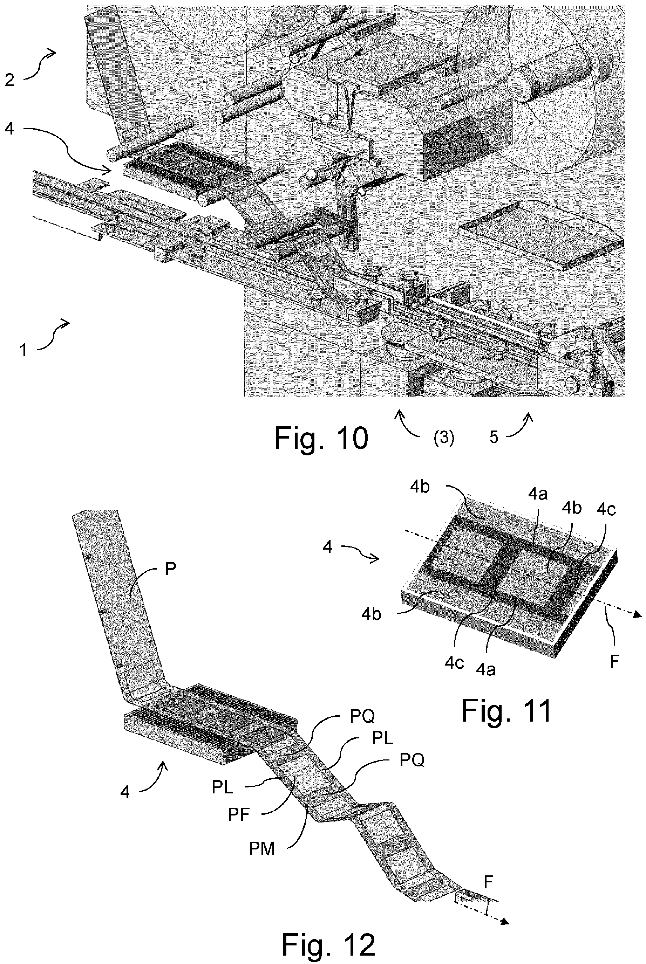

Fig. 10 eine Darstellung der erfindungsgemäßen Verpackungs- und Versiegelungsvorrichtung nach dem vierten Ausführungsbeispiel der Erfindung, wobei die Heizeinrichtung als Heizeinheit eine Matrix-Heizplatte mit ebener Heizfläche und matrixförmig über die Heizfläche verteilt angeordneten Heizabschnitten aufweist, um das Packmittel im Siegelbereich, umfassend die Längs- und Quersiegelflächen des Packmittels, unter Aussparung des Funktionsbereichs, umfassend die zwischenliegende Funktionsfläche, mit einem auf den Siegelbereich abgestimmten und mit dem Packmittel mitwandernden Heizmuster während einer kontinuierlichen Förderung des Packmittels über die Heizplatte gezielt zu beheizen.
Fig. 11 eine Darstellung der Heizeinrichtung der erfindungsgemäßen Verpackungs- und Versiegelungsvorrichtung gemäß Figur 10 in isolierter Ansicht.
Fig. 12 eine Darstellung des Erwärmungsprofils auf dem Packmittel vor und nach der Heizeinrichtung gemäß Figur 10 und 11.
Fig. 13 in den Ansichten bis (d) eine Darstellung der Heizeinrichtung der erfindungsgemäßen Verpackungs- und Versiegelungsvorrichtung gemäß Figur 10 zur Veranschaulichung des mit dem Packmittel mitwandernden Heizmusters zur Beaufschlagung des Packmittels im Siegelbereich, umfassend die Längs- und Quersiegelflächen des Packmittels, unter Aussparung des Funktionsbereichs, umfassend die zwischenliegende Funktionsfläche, in verschiedenen Zuständen.
Fig. 14 in Ansicht eine Matrix-Heizplatte gemäß den Figuren 10 bis 13 mit einem Heizmuster zur Beaufschlagung der Quersiegelflächen des Packmittels, und in Ansicht (b) eine Matrix-Heizplatte gemäß den Figuren 10 bis 13 mit einem Heizmuster zur Beaufschlagung der Längssiegelflächen des Packmittels.

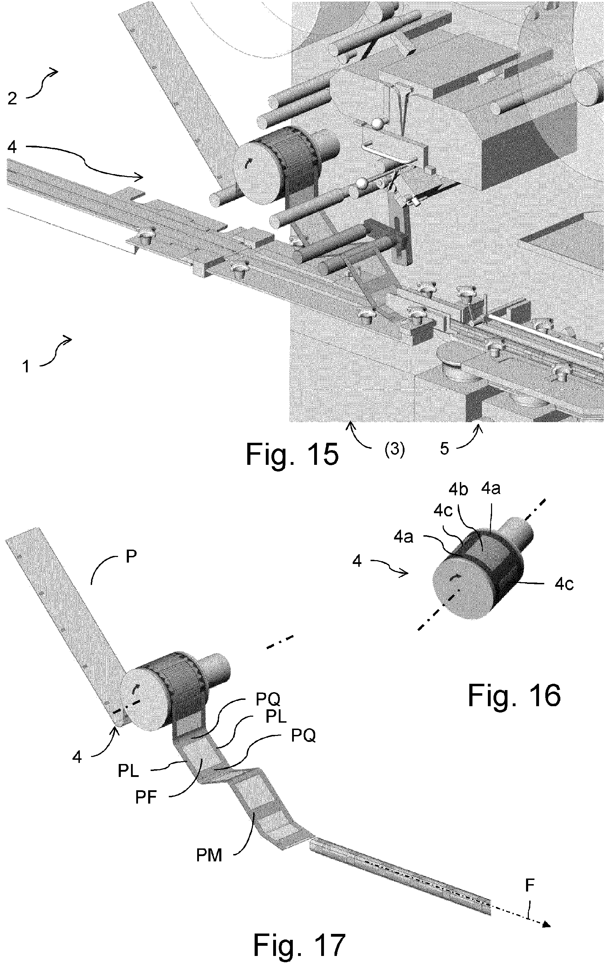

Fig. 15 eine Darstellung der erfindungsgemäßen Verpackungs- und Versiegelungsvorrichtung nach dem fünften Ausführungsbeispiel der Erfindung, wobei die Heizeinrichtung als Heizeinheit eine sich um eine Drehachse drehende Matrix-Heiztrommel mit einer Vielzahl von matrixförmig über die zylindrische Mantelfläche der Heiztrommel verteilt angeordneten Heizabschnitten aufweist, wobei das Packmittel mittels zweier vor- bzw. nachgeschalteter Umlenkrollen über die Heiztrommel derart gespannt ist, dass das Packmittel schlupffrei an der sich drehenden Matrix-Heiztrommel anliegt, sodass das Packmittel mit dem auf den Siegelbereich abgestimmten Heizmuster, das durch die selektive Beheizung der separat beheizbaren Heizabschnitte erzeugt wird, im Siegelbereich, umfassend die Längs- und Quersiegelflächen des Packmittels, unter Aussparung des Funktionsbereichs, umfassend die zwischenliegende Funktionsfläche, gezielt mit Heizenergie beaufschlagt wird.
Fig. 16 eine Darstellung der Matrix-Heiztrommel gemäß Figur 15 in isolierter Ansicht.
Fig. 17 eine Darstellung des Erwärmungsprofils auf dem Packmittel vor und nach der Matrix-Heiztrommel gemäß Figur 15 und 16.

### Detaillierte Beschreibung der bevorzugten Ausführungsbeispiele

Ein erfindungsgemäßes Verfahren und eine erfindungsgemäße Vorrichtung 1 zum Verpacken und Versiegeln kleinstückiger Artikel in einem partiell vorgeheizten, heißsiegelfähigen Packmittel P werden nachstehend anhand vorteilhafter Ausführungsbeispiele im Detail mit Bezug auf die beiliegenden Figuren erläutert.

Zunächst werden die gemeinsamen Merkmale der Ausführungsbeispiele anhand des ersten Ausführungsbeispiels beschrieben, bevor die Abweichungen der übrigen Ausführungsbeispiele erklärt werden.

### Erstes Ausführungsbeispiel (Fig. 1 bis 3): Lokal beheizte Heizplatte mit ebener Heizfläche

Das heißsiegelfähige Packmittel P umfasst eine siegelfähige Siegelmaske mit zwei Längssiegelflächen PL und einer sich dazwischen erstreckenden Funktionsfläche PF außerhalb der Siegelflächen PL. Die beiden Längssiegelflächen PL sind dazu bestimmt, zur Überdeckung gebracht zu werden, um unter Umschließung des Artikels wenigstens eine Siegelnaht zu bilden, um den zu verpackenden Artikel in dem Packmittel P dicht zu versiegeln. In allen beschriebenen Ausführungsbeispielen entspricht die Siegelmaske, umfassend die Siegelflächen PL, PQ, dem Siegelbereich des Packmittels P, und die Funktionsfläche PF entspricht dem Funktionsbereich. Abweichend von den beschriebenen Ausführungsbeispielen kann sich die Siegelmaske aber auch über den Siegelbereich hinaus erstrecken.

Die erfindungsgemäße Vorrichtung 1 dient zum Verpacken und Versiegeln kleinstückiger Artikel, insbesondere Lebensmittel oder Verbrauchsgüter wie Süßwaren, Brühtabletten oder Waschtabs, in heißsiegelfähigem Packmittel P unter Ausführung des erfindungsgemäßen Verfahrens. Diese Vorrichtung 1 umfasst eine Packmittel-Bereitstellungseinrichtung 2 zum Bereitstellen des Packmittels P, eine Artikel-Bereitstellungseinrichtung 3 zum Bereitstellen der zu verpackenden Artikel, eine Heizeinrichtung 4 zum Beaufschlagen des Packmittels P im Siegelbereich mit Heizenergie, eine Verpackungseinrichtung 5 zum Bilden einer Verpackung um den Artikel aus vorgewärmten Packmittel P, und eine Versiegelungseinrichtung 5 zum Versiegeln der Verpackung.

Die Packmittel-Bereitstellungseinrichtung 2 ist ausgebildet, um das Packmittel P von mehreren Packmittelrollen in einer Förderrichtung F kontinuierlich oder intermittierend über mehrere Umlenkrollen in den Wirkungsbereich der Heizeinrichtung 4 zu fördern, sodass das Packmittel P dort gezielt mit Heizenergie beaufschlagt werden kann.

Im ersten Ausführungsbeispiel weist die Heizeinrichtung 4 als Heizeinheit eine ebene, partiell beheizte Heizplatte auf.

Das ebene Packmittel P überstreift während des kontinuierlichen Laufs die Heizeinrichtung 4 und wird im Wirkungsbereich der Heizeinrichtung 4 von den beiden parallel zur Förderrichtung des Packmittels P ausgerichteten und durch den unbeheizten Zwischenbereich 4b voneinander beanstandeten Heizabschnitten 4a partiell im Siegelbereich bzw. in den beiden sich längsrandseitig am Packmittel P erstreckenden Längssiegelflächen PL erwärmt. Ein verbesserter Bedienerschutz kann durch eine komplette Einhausung der Heizeinrichtung 4 unter Beachtung erforderlicher Sicherheitsabstände gewährleistet werden. Im Falle des Anlagenstillstandes wird vorzugsweise die Heizplatte auf Abstand zum Packmittel P gebracht, sodass beim manuellen Einlegen des Packmittels P in die Bereitstellungseinrichtung 2 der Kontakt zur Heizeinrichtung 4 ausgeschlossen werden kann.

Die Länge der Heizeinrichtung 4 entlang der Förderrichtung F bestimmt die Zeitdauer bzw. Einwirkzeit, in welcher sich das in Förderrichtung F geförderte Packmittel P im Wirkungsbereich der Heizeinrichtung 4 befindet, und damit die erzielbare Vorwärmzeit des Packmittels P. Die Erwärmung des Packmittels P kann in Abhängigkeit der Ausführung sowohl auf der Unterseite, als auch auf der Oberseite erfolgen.

Durch die gezielte Erwärmung des Packmittels P im Siegelbereich, entsprechend den beiden voneinander beabstandeten Längssiegelflächen PL, mittels der beiden Heizabschnitte 4a unter Aussparung des Funktionsbereichs, entsprechend der zwischenliegenden Funktionsfläche PF, werden die Bereiche der späteren Längsnaht vorgewärmt.

Die Heizeinrichtung kann derart ausgelegt werden, dass eine Erwärmung auf der Außenseite und/oder auf der Innenseite des Packmittels P erfolgt. Die Oberflächentemperatur der Heizeinrichtung liegt hierbei vorzugsweise unterhalb der Schmelztemperatur des Packmittels P. Die im Packmittel P gespeicherte Wärme ermöglicht den Einsatz schwächer temperierter Siegelwerkzeuge im weiteren Verarbeitungsprozess.

Die Ansteuerung dieser Heizeinrichtung 4 erfolgt mittels Heizstäben und Thermofühlern oder induktiv.

Das Packmittel P wird über die Heizeinrichtung 4 entweder mit direktem, reibungsbehaftetem Kontakt oder mit einem minimalen Luftspalt geführt. Die Beaufschlagung des Packmittels P mit Heizenergie durch die Heizeinrichtung 4 erfolgt demnach über Wärmestrahlung (Radiation) und gegebenenfalls über Wärmeleitung (Konstruktion). Durch Zufuhr von Heißluft kann auch eine Wärmeübertragung von der Heizeinrichtung 4 auf das Packmittel P durch Konvektion erfolgen.

### Zweites Ausführungsbeispiel (Fig. 4 bis 6): Heiztrommel mit definierter Heizkontur

Im zweiten Ausführungsbeispiel der Erfindung ist die Heizeinrichtung 4 als kontinuierlich angetriebene Heiztrommel mit definierter Heizkontur ausgebildet.

Eine partielle Vorwärmung des Packmittels P erfolgt mit dieser in die Packmittel-Bereitstellungseinrichtung 2 integrierten Heizeinrichtung 4 sowohl in den beiden quer zur Förderrichtung F des Packmittels P beabstandeten Längssiegelflächen PL, als auch in den in Förderrichtung F beabstandeten Quersiegelflächen Q. Die Wärmeeinwirkung auf den zu verpackenden Artikel wird somit minimiert. Auf der Packmittelbahn wird das Packmittel P im Siegelbereich, der hier mit der Siegelmaske aus Längs- und Quersiegelflächen PL, PQ zusammenfällt, formatspezifisch vorgewärmt.

Im zweiten Ausführungsbeispiel wird die partielle Vorwärmung des Packmittels P mit Hilfe einer Heizeinrichtung 4 realisiert, die als Heizeinheit eine formatspezifisch ausgeführte Heiztrommel aufweist. Auf dieser Heiztrommel ist mindestens eine, alternativ ganzzahlige Vielfache der Abschnittslänge des Packmittels P abgebildet. Die Außenseite der Heiztrommel ist ausschließlich in den Heizabschnitten 4a, 4c entsprechend dem Siegelbereich, d. h. den Längs- und Quersiegelflächen PL, PQ, beheizt, und in dem dazwischenliegenden Abschnitt 4b unbeheizt. Der Funktionsbereich PF des Packmittels P, der im weiteren Verlauf mit den zu verpackenden Artikeln in Kontakt gelangt, erfährt demnach keine Erwärmung. Die entsprechenden Bereiche 4b der Heiztrommel müssen daher auch keinen Kontakt mit dem Packmittel P aufweisen und können als Aussparungen ausgeführt sein.

Die Ansteuerung der Heizeinrichtung 4 erfolgt mittels Heizstäben und Thermofühlern oder induktiv.

Die Heiztrommel ist drehbar innerhalb der Packmittel-Bereitstellungseinrichtung 2 zwischen zwei Umlenkrollen gelagert und angetrieben. Die Umfangsgeschwindigkeit der Heiztrommel entspricht der Fördergeschwindigkeit des Packmittels P in Förderrichtung F. Es besteht demnach zwischen der Außenseite des Packmittels P und der Heiztrommel keine Geschwindigkeitsdifferenz.

Durch den vorliegenden Gleichlauf zwischen Packmittel P und Heiztrommel wird die Zeitdauer, in welcher sich das Packmittel P im Wirkungsbereich der Heizeinrichtung 4 befindet, d. h. die Wärmeeinwirkzeit, durch die Größe des umschlossenen Kreissegmentes, bzw. der Länge des Kreisbogens, an welchem das Packmittel P in Kontakt mit der Heiztrommel steht, bestimmt. Die der Heiztrommel vorgelagerte Umlenkrolle führt das Packmittel P tangential auf die Mantelfläche der Heiztrommel. Durch mindestens eine weitere Umlenkrolle wird die Umschlingungslänge der Heiztrommel durch das Packmittel P definiert.

Bei Maschinenstillstand wird das Packmittel P vorzugsweise von der Heiztrommel 4 abgehoben, um eine Beschädigung des Packmittels P zu vermeiden.

Für einen qualitätsgerechten Anlagenstart sollte mindestens der Abschnitt des Packmittels P, welcher sich zum Zeitpunkt des Anlagenstopps im Bereich zwischen der Heizeinrichtung 4 und der Siegeleinrichtung 6 befindet, ausgeschleust werden.

Zur Verarbeitung unterschiedlicher Folienabmessungen sowie zur Anpassung an unterschiedliche Formate kann die Heiztrommel vorzugsweise ausgetauscht werden.

### Drittes Ausführungsbeispiel (Fig. 7 bis 9): Dynamisch angetriebene Heiztrommel

Zur Erzielung größerer Flexibilität wird das dritte Ausführungsbeispiel als Erweiterung des zweiten Ausführungsbeispiels für den Einsatz als formatunabhängiges System beschrieben.

Zur Verarbeitung unterschiedlicher Packmittelabmessungen (Längen und Breiten) ist auf der Heiztrommel nicht mehr die exakte Abschnittsdimension der Längs- und Quersiegelflächen PL, PQ geometrisch gespeichert. Vielmehr umfasst die Heizeinrichtung 4 nach dem dritten Ausführungsbeispiel als Heizeinheit eine dynamisch angetriebene Heiztrommel. Die Mantelfläche der Heiztrommel besteht aus seitlichen, in der Breite verstellbaren Heizleisten bzw. Heizabschnitten 4a sowie mindestens einem beheizten Querbalken 4c. Die seitlichen Heizleisten 4a, deren Außenradius mit dem Außenradius der Heiztrommel übereinstimmt, erwärmen die Längssiegelflächen PL des Packmittels. Der beheizte Querbalken 4c ist ebenfalls im Außenbereich gewölbt und koradial zu den seitlichen Heizleisten 4a angeordnet. Er dient zur Erwärmung der Quersiegelflächen PQ jedes zu vereinzelnden Packmittelabschnitts. Die Zwischenbereiche 4b der dynamisch angetriebenen Heiztrommel sind ausgespart, sodass dort kein Kontakt zum Packmittel P zustande kommt.

Die Ansteuerung dieser Heizeinrichtung 4 erfolgt mittels Heizstäben und Thermofühlern oder induktiv.

Der Antrieb der Heiztrommel erfolgt dynamisch, sodass der beheizte Querbalken 4c stets nach dem Durchlaufen der entsprechenden Länge eines Packmittelabschnitts wieder mit dem Packmittel P in Kontakt kommt und die nächsten Quersiegelfläche PQ erwärmt. Während des Kontaktes des beheizten Querbalkens 4c mit dem kontinuierlich laufenden Packmittel P befindet sich die Heiztrommel im Gleichlauf mit dem Packmittel P. Nach Durchlaufen der in Kontakt stehenden Kreisbogenlänge beschleunigt oder verzögert die Heiztrommel entsprechend der Länge jedes zu vereinzelnden Packmittelabschnitts ihre Geschwindigkeit. Während dieser Ausgleichsbewegung treten Differenzgeschwindigkeiten im Bereich der durch die seitlichen Heizleisten 4a vorzuwärmenden Packmittelabschnitte auf.

Die Oberflächentemperaturen der Heiztrommel liegen vorzugsweise ebenfalls unterhalb der Schmelztemperatur der Folie.

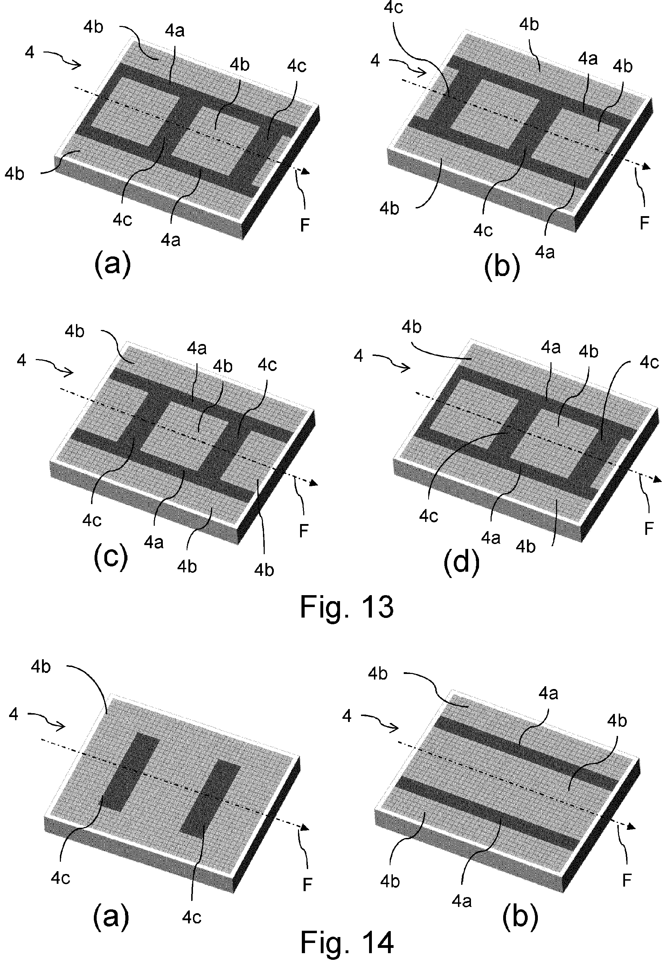

### Viertes Ausführungsbeispiel (Figuren 10 bis 14): Matrix-Heizplatte mit dynamisch angesteuerten Heizkreisen

Im vierten Ausführungsbeispiel der Erfindung umfasst die erfindungsgemäße Heizeinrichtung 4 als Heizeinheit eine Matrix-Heizplatte mit matrixförmig in einer Ebene angeordneten, individuell beheizbaren Heizabschnitten 4a (dauerhaft beheizt), 4b (vorübergehend/dauerhaft unbeheizt), 4c (vorübergehend beheizt).

Die Heizabschnitte 4a, 4b, 4c der Heizplatte sind mit individuell und hochdynamisch ansteuerbaren Heizkreisen ausgestattet, um einen kompletten Verzicht auf mechanisch angetriebene Systeme zur partiellen Vorwärmung des Packmittels P zu ermöglichen. Diese Heizplatte wird innerhalb der Packmittel-Bereitstellungseinrichtung 2 von dem flachen Packmittel P überstriffen. Die Ausführung der Heizkreise in Verbindung mit der Regelungstechnik ermöglicht die Erstellung von hochdynamisch beweglichen Heizprofilen bzw. Heizmustern auf der Platte. Die individuellen Heizkreise werden durch eine übergeordnete Steuereinheit entsprechend dem darüber geförderten Packmittel P angesteuert. Nach erfolgreicher Einmessung einer auf dem Packmittel P befindlichen Referenzmarke bzw. Druckmarke PM erfolgt die Erwärmung der Matrix-Heizplatte gezielt und ausschließlich in den Bereichen, welche erwärmt werden müssen, d. h. in den Heizabschnitten 4a, 4c entsprechend den Längssiegelflächen PL und Quersiegelflächen PQ, aber nicht in den Heizabschnitten 4b entsprechend der von Längs- und Quersiegelflächen PL, PQ eingeschlossenen Funktionsfläche PF sowie der außerhalb der Heizabschnitte 4a, 4c gelegenen Randbereiche. Aufgrund des kontinuierlichen Folienvorschubs verlagert sich die aktivierte Heizfläche bzw. das Heizmuster auf der Heizplatte in Förderrichtung F im Einklang mit der Bewegung des Packmittels P. Das Erwärmungsprofil bzw. Heizmuster der Heizplatte wird - in der Form und in der flächenspezifischen Heizintensität unverändert - entsprechend der Bewegung des Packmittels P nachgeführt. Aufgrund der technischen Ausführung des verwendeten Heizsystems bestehen sehr geringe thermische Massen. Diese ermöglichen eine schnelle Erwärmung und fungieren des Weiteren als thermischer Isolator. Die Erwärmung der Funktionsfläche PF des Packmittels P außerhalb der Längs- und Quersiegelflächen PL, PQ kann somit vermieden werden. Durch die Dimensionierung der Länge der Heizplatte ist die max. erzielbare Wärmeeinwirkzeit auf das Packmittel P entsprechend dessen Vorschubgeschwindigkeit in Förderrichtung F definiert. Die Wärmeeinwirkung auf das Packmittel P kann in Abhängigkeit der Ausführung sowohl auf der Außen-, als auch auf der Innenseite erfolgen. Das Packmittel P wird entweder mit einem minimalen Luftspalt, oder in direktem, reibungsbehaftetem Kontakt über die Heizplatte geführt. Demnach erfolgt die Wärmeübertragung von der Heizeinrichtung 4 auf das Packmittel zumindest durch Wärmestrahlung (Radiation), ggf. auch durch Wärmeleitung (Konduktion), möglicherweise auch durch Konvektion.

### Fünftes Ausführungsbeispiel (Figuren 15 bis 17): Matrix-Heiztrommel mit dynamisch angesteuerten Heizkreisen

Im fünften Ausführungsbeispiel der Erfindung umfasst die erfindungsgemäße Heizeinrichtung 4 als Heizeinheit eine Matrix-Heiztrommel mit matrixförmig in der zylindrischen Mantelfläche der Heiztrommel angeordneten, individuell beheizbaren Heizabschnitten 4a, 4c (beheizt), 4b (unbeheizt).

Diese Matrix-Heiztrommel wird innerhalb der Packmittel-Bereitstellungseinrichtung 2 von dem über vor und nachgeschaltete Umlenkrollen gespannten Packmittel P mantelseitig überdeckt. Nach erfolgreicher Einmessung einer auf dem Packmittel P befindlichen Referenzmarke bzw. Druckmarke PM wird über die individuell beheizbaren Heizabschnitte 4a, 4b, 4c der Matrix-Heiztrommel ein auf den Siegelbereich des Packmittels abgestimmtes Heizmuster erzeugt. Dazu werden einzelne Heizabschnitte 4a, 4c beheizt, andere Heizabschnitte 4b nicht beheizt. Dadurch erfolgt die Erwärmung der Matrix- Heiztrommel gezielt und ausschließlich in den Heizabschnitten 4a, 4c entsprechend dem Siegelbereich des Packmittels P, umfassend die Längssiegelflächen PL und Quersiegelflächen PQ, aber nicht in den Heizabschnitten 4b entsprechend dem Funktionsbereich des Packmittels P bzw. der von Längs- und Quersiegelflächen PL, PQ eingeschlossenen Funktionsfläche PF sowie der außerhalb der Heizabschnitte 4a, 4c gelegenen Randbereiche. Aufgrund der Drehung der Matrix-Heiztrommel um deren Achse verlagert sich die aktivierte Heizfläche bzw. das Heizmuster entsprechend dem Vorschub des Packmittels in Förderrichtung F. Das Erwärmungsprofil bzw. Heizmuster der Matrix- Heiztrommel wird - in der Form und in der flächenspezifischen Heizintensität unverändert - entsprechend der Bewegung des Packmittels P nachgeführt. Abweichend vom vierten Ausführungsbeispiel erfolgt die Nachführung des Heizmuster an die Bewegung des Packmittels im fünften Ausführungsbeispiel also nicht zwingend durch die selektive Aktivierung und Deaktivierung einzelner Heizabschnitte 4a, 4b, 4c, sondern durch die Drehung der Matrix-Heiztrommel, während dieselben Heizabschnitte 4a, 4b, 4c aktiviert bzw. deaktiviert bleiben. Durch die individuell beheizbaren Heizabschnitte 4a, 4b, 4c der Matrix-Heiztrommel kann dennoch ein schneller Formatwechsel erfolgen.

Mit dieser Ausführungsform lässt sich eine komplett individuell angepasst Heizmaske auf der Mantelfläche der Matrix-Heiztrommel abbilden. Die Matrix-Heiztrommel rotiert mit Foliengeschwindigkeit, sodass keine Relativbewegungen zwischen den beiden Komponenten vorhanden sind. Durch die flexible Ansteuerung einzelner Heizkreise auf der Mantelfläche der Matrix-Heiztrommel muss der Umfang der Matrix-Heiztrommel nicht einem Vielfachen der Folienabschnittslänge gleichen. Vielmehr muss der Umfang der Matrix-Heiztrommel einem ganzzahligen Vielfachen der Länge einzelner Heizkreise entsprechen.

Bei den vorzuheizenden Packmitteln handelt es sich vorzugsweise um dünne Folien (Kunststoff-Verbundfolien, Papierverbundfolien).

Bei allen Ausführungsbeispielen wird das Packmittel, welches sich im Bereich zwischen dem Vorheizsystem sowie der Quersiegelung befindet, vorzugsweise nach Maschinenstillstand ausgeschleust, bevor der komplette Verpackungsprozess neu gestartet wird.

Die vorliegende Erfindung ermöglicht eine besonders schonende Verarbeitung sensiblerer Folien durch reduzierte Siegelbackentemperaturen sowie erhöhten Wärmeeintrag.

Die vorliegende Erfindung umfasst auch die folgenden, funktionalen Erweiterungen des oben beschriebenen Prinzips:
Die Heizeinrichtungen der Ausführungsbeispiele 1 bis 5 können sowohl in kontinuierliche, als auch diskontinuierliche Prozesse integriert werden. Die Vorwärmung des Packmittels mittels der Heizeinrichtung kann wahlweise vor oder nach der Vereinzelung des Packmittels erfolgen.

Das Packmittel kann in Form eines endlosen Schlauches oder in Einzelabschnitten verarbeitet werden. Ein diskontinuierlich betriebener Stangenpacker kann zur partiellen Vorwärmung des Flossenbereiches für eine Dichtsiegelung eingesetzt werden.

Eine Anwendung der Erfindung ist sowohl in Maschinen zur Herstellung von Packungen mit Überlappnaht (Nahtbildung durch Versiegelung der Folieninnenseite mit einer Folienaußenseite), als auch in Maschinen zur Herstellung von Packungen mit Flossennaht (Nahtbildung durch Versiegelung zweier Folieninnenseiten) vorteilhaft.

Eine partielle Vorwärmung des Packmittels lediglich im Quernahtbereich (ohne Längsnahtbereich) ist beispielsweise für Flowpacks sinnvoll. Mit der Heizeinrichtung müssen nicht alle späteren Siegelbereiche vorgewärmt werden. Es ist eine Kombination aus einer separaten Vorheizung im Bereich der Längssiegelung sowie der partiellen Vorwärmung der späteren Quernaht im nicht umgeformten Bereich des Packmittels denkbar.

### Bezugszeichenliste

- 1: Vorrichtung
- 2: Packmittel-Bereitstellungseinrichtung
- 3: Artikel-Bereitstellungseinrichtung
- 4: Heizeinrichtung (Packmittel-Vorheizeinrichtung)
- 4a: Heizabschnitt (für Längssiegelfläche des Packmittels)
- 4b: Unbeheizter Abschnitt
- 4c: Heizabschnitt (für Quersiegelfläche des Packmittels)
- 5: Verpackungs- und Versiegelungseinrichtung
- F: Förderrichtung
- P: Packmittel
- PL: Längssiegelfläche
- PQ: Quersiegelfläche
- PF: Funktionsfläche
- PM: Referenzmarkierung

## Patentansprüche

1. Verfahren zum Verpacken und Versiegeln kleinstückiger Artikel, wie Süßwaren, Brühtabletten oder Waschtabs, in einem partiell vorgeheizten, heißsiegelfähigen Packmittel (P), umfassend die Schritte:
a. Schritt A: Bereitstellen eines heißsiegelfähigen Packmittels (P).
b. Schritt B: Bereitstellen der kleinstückigen Artikel, vorzugsweise in Reihe entlang wenigstens einer Artikelbahn.
c. Schritt C: Beaufschlagen des Packmittels (P) mit Heizenergie, sodass sich das Packmittel (P) in einem Siegelbereich (PL, PQ) im Vergleich zu einem davon abweichenden Funktionsbereich (PF) erwärmt.
d. Schritt D: Bilden einer Verpackung um wenigstens einen der Artikel aus dem mit Heizenergie beaufschlagten Packmittel (P).
e. Schritt E: Versiegeln der Verpackung im Siegelbereich (PL, PQ) des Packmittels (P).

2. Verfahren nach Anspruch 1, **dadurch gekennzeichnet, dass** Schritt A wenigstens einen der folgenden Teilschritte umfasst:
a. Teilschritt A-1: Bereitstellen des Packmittels (P) mit wenigstens einer artikelspezifischen Siegelmaske.
b. Teilschritt A-2: Abrollen des Packmittels (P) von einer Packmittelrolle.
c. Teilschritt A-3: Fördern des Packmittels (P) in einer Förderrichtung (F) entlang einer Packmittelbahn, vorzugsweise am Strang, bevorzugt derart, dass wenigstens zwei voneinander beabstandete Längssiegelflächen (PL) parallel zur Förderrichtung (F) ausgerichtet sind und/oder wenigstens zwei voneinander beabstandete Quersiegelflächen (PQ) quer zur Förderrichtung (F) ausgerichtet sind, wobei sich die Längssiegelflächen (PL) bevorzugt entlang der Längsränder des Packmittels (P) erstrecken und/oder die Quersiegelflächen (PQ) von einem bis zum anderen Längsrand des Packmittels (P) erstrecken.
d. Teilschritt A-4: Spannen des Packmittels (P) in Förderrichtung (F), vorzugsweise über wenigstens eine Umlenkrolle, bevorzugt über zwei Umlenkrollen, zwischen denen eine Heizeinrichtung (4) zur Beaufschlagung des Packmittels mit Heizenergie angeordnet ist, sodass sich das Packmittel (P) im Wirkungsbereich der Heizeinrichtung (4) zumindest abschnittsweise in einer Ebene erstreckt oder das Packmittel (P) zumindest abschnittsweise eine Zylindermantelfläche bildet.
e. Teilschnitt A-5: Vereinzeln des Packmittels (P), vorzugsweise von einer Packmittelrolle, vor oder nach der Zuordnung zu dem Artikel.

3. Verfahren nach einem der vorangehenden Ansprüche, **dadurch gekennzeichnet, dass** Schritt B wenigstens einen der folgenden Teilschritte umfasst:
a. Teilschritt B-1: Vereinzeln der Artikel aus einem Artikelvorrat.
b. Teilschritt B-2: Fördern der Artikel entlang der Artikelbahn.
c. Teilschritt B-3: Gruppieren vereinzelter Artikel zu einer Artikelgruppe, vorzugsweise durch Erzeugen eines Produktstaus entlang der Artikelbahn.

4. Verfahren nach einem der vorangehenden Ansprüche, **dadurch gekennzeichnet, dass** Schritt C wenigstens einen der folgenden Teilschritte umfasst:
a. Teilschritt C-1: Anordnen des Packmittels (P) im Wirkungsbereich einer Heizeinrichtung (4), sodass die Heizeinrichtung (4) das Packmittel (P) durch Wärmeleitung (Konduktion) und/oder Wärmestrahlung (Radiation) und/oder Konvektion mit Heizenergie beaufschlägt.
b. Teilschritt C-2: Ausrichten der Heizeinrichtung (4) zum Packmittel (P) oder Ausrichten des Packmittels (P) zur Heizeinrichtung (4) anhand von wenigstens einer Referenzmarkierung (PM) des Packmittels (P), vorzugsweise anhand von wenigstens einer Referenzmarkierung (PM) für jeden einem Artikel zuordenbaren Packmittelabschnitt.
c. Teilschritt C-3: Erzeugen eines auf den Siegelbereich (PL, PQ) abgestimmten Heizmusters mittels einer Heizeinrichtung (4), um das Packmittel (P) im Siegelbereich (PL, PQ) im Vergleich zu dem Funktionsbereich (PF) gezielt zu erwärmen, vorzugsweise ohne das Packmittel (P) im Funktionsbereich (PF) zu erwärmen.
d. Teilschritt C-4: Bewegen und/oder Verändern des Heizmusters im Einklang mit einer Bewegung des Packmittels (P), vorzugsweise im Einklang mit einer Bewegung wenigstens einer Referenzmarkierung (PM) auf dem Packmittel (P), bevorzugt in Förderrichtung des Packmittels (P), besonders bevorzugt mit gleicher Geschwindigkeit wie das Packmittel (P).
e. Teilschritt C-5: Beaufschlagen des Packmittels (P) mit Heizenergie von einer Seite oder von beiden Seiten des Packmittels (P).

5. Verfahren nach einem der vorangehenden Ansprüche, **dadurch gekennzeichnet, dass** Schritt D wenigstens einen der folgenden Teilschritte umfasst:
a. Teilschritt D-1: Zuordnen des Packmittels (P) zu dem wenigstens einen Artikel, vorzugsweise derart, dass eine siegelfähige Seite des Packmittels (P) zu dem Artikel weist.
b. Teilschritt D-2: Anordnen des Packmittels (P) in Schlauchform um den wenigstens einen Artikel.

6. Verfahren nach einem der vorangehenden Ansprüche, **dadurch gekennzeichnet, dass** Schritt E wenigstens einen der folgenden Teilschritte umfasst:
a. Teilschritt E-1: Bilden einer Siegelnaht in Form einer Flossennaht durch Überdeckung zweier auf derselben Seite des Packmittels (P) angeordneter Siegelflächen (PL, PQ).
b. Teilschritt E-2: Bilden einer Siegelnaht in Form einer Überlappnaht durch Überdeckung zweier auf unterschiedlichen Seiten des Packmittels angeordneter Siegelflächen (PL, PQ).
c. Teilschritt E-3: Schließen der Verpackung um jeden einzelnen Artikel oder um eine Artikelgruppe aus mindestens zwei Artikeln, vorzugsweise derart, dass der Artikel das Packmittel (P) ausschließlich im Funktionsbereich (PF) kontaktiert.
d. Teilschritt E-4: Siegeln des Packmittels (P) im Bereich zweier sich überdeckender Siegelflächen (PL, PQ).

7. Vorrichtung (1) zum Verpacken und Versiegeln kleinstückiger Artikel, wie Süßwaren, Brühtabletten oder Waschtabs, in einem partiell vorgeheizten, heißsiegelfähigen Packmittel (P), vorzugsweise nach dem Verfahren gemäß einem der vorangehenden Ansprüche, umfassend:
a. Eine Packmittel-Bereitstellungseinrichtung (2) zum Bereitstellen eines heißsiegelfähigen Packmittels (P).
b. Eine Artikel-Bereitstellungseinrichtung (3) zum Bereitstellen der kleinstückigen Artikel, vorzugsweise in Reihe entlang wenigstens einer Artikelbahn.
c. Eine Heizeinrichtung (4) zum Beaufschlagen des Packmittels (P) mit Heizenergie, sodass sich das Packmittel (P) in einem Siegelbereich (PL, PQ) im Vergleich zu einem davon abweichenden Funktionsbereich (PF) erwärmt.
d. Eine Verpackungseinrichtung (5) zum Bilden einer Verpackung um wenigstens einen der Artikel aus dem mit Heizenergie beaufschlagten Packmittel (P).
e. Eine Versiegelungseinrichtung (5) zum Versiegeln der Verpackung im Siegelbereich (PL, PQ) des Packmittels (P).

8. Vorrichtung (1) nach Anspruch 7, **dadurch gekennzeichnet, dass** die Heizeinrichtung (4) ausgebildet ist, um ein artikel- bzw. packmittelspezifisches Heizmuster zu erzeugen, wobei das Heizmuster vorzugsweise auf den Siegelbereich (PL, PQ) abgestimmt ist, wobei das Heizmuster bevorzugt im Einklang mit einer Bewegung des Packmittels (P) bewegbar und/oder veränderbar ist.

9. Vorrichtung (1) nach einem der Ansprüche 7 oder 8, **dadurch gekennzeichnet, dass** die Heizeinrichtung (4) wenigstens eine stationäre Heizeinheit aufweist, wobei das Packmittel (P) bei der Beaufschlagung mit Heizenergie im Vergleich zu der stationären Heizeinheit steht oder sich bewegt.

10. Vorrichtung (1) nach einem der Ansprüche 7 bis 9, **dadurch gekennzeichnet, dass** die Heizeinrichtung (4) wenigstens eine bewegbare Heizeinheit aufweist, die derart konfiguriert ist, um sich während der Beaufschlagung des Packmittels (P) mit Heizenergie zu bewegen, vorzugsweise in Förderrichtung (F) des Packmittels (P), bevorzugt translatorisch oder rotatorisch, besonders bevorzugt mit einer Geschwindigkeit, die gleich ist wie oder größer ist als die Fördergeschwindigkeit des Packmittels (P) in Förderrichtung (F).

11. Vorrichtung (1) nach einem der Ansprüche 7 bis 10, **dadurch gekennzeichnet, dass** die Heizeinrichtung (4) wenigstens eine variable Heizeinheit aufweist, die eine Mehrzahl separat beheizbarer und/oder separat verstellbarer Heizabschnitte umfasst, wobei die Heizabschnitte vorzugsweise matrixförmig angeordnet sind, bevorzugt in einer Ebene oder in einer rotationssymmetrischen Mantelfläche.

12. Vorrichtung (1) nach einem der Ansprüche 7 bis 11, **dadurch gekennzeichnet, dass** die Heizeinrichtung (4) eine sich um eine Drehachse drehbare Heiztrommel aufweist, wobei die Heiztrommel zwei entlang ihrer Drehachse beabstandete, vorzugsweise ringförmige Heizabschnitte (4a), bevorzugt für zwei Längssiegelflächen (PL) des Packmittels (P) aufweist, und/oder wobei die Heiztrommel wenigstens einen sich parallel zur Drehachse erstreckenden, vorzugsweise balkenförmigen Heizabschnitt (4c), bevorzugt für zwei Quersiegelflächen (PQ) des Packmittels (P) aufweist.

13. Vorrichtung (1) nach einem der Ansprüche 7 bis 12, **dadurch gekennzeichnet, dass** die Heizeinrichtung (4) in Abhängigkeit von wenigstens einer Referenzmarkierung (PM) auf dem Packmittel (P) steuerbar ist, wobei vorzugsweise die Heizeinrichtung (4) in Abhängigkeit von wenigstens einer Referenzmarkierung (PM) auf dem Packmittel (P) bewegbar ist, wobei bevorzugt wenigstens ein Heizabschnitt (4a) der Heizeinrichtung (4) in Abhängigkeit von wenigstens einer Referenzmarkierung (PM) auf dem Packmittel (P) bewegbar und/oder beheizbar ist.

14. Vorrichtung (1) nach einem der Ansprüche 7 bis 13, **dadurch gekennzeichnet, dass** die Heizeinrichtung (4) derart ausgebildet ist, um eine Vielzahl identischer Abschnitte des Packmittels nach einem identischen Heizmuster mit Heizenergie zu beaufschlagen, vorzugsweise im kontinuierlichen oder diskontinuierlichen Verfahren.

## Claims

1. A method of packaging and sealing small-sized articles, such as confectionery, bouillon cubes or washing tabs, in a partially preheated heat-sealable packaging material (P), comprising the following steps:
a. step A: providing a heat-sealable packaging material (P).
b. step B: providing the small-sized articles, preferably in a row along at least one article track.
c. step C: applying thermal energy to the packaging material (P) so that the packaging material (P) is locally heated up in a sealing area (PL, PQ) compared to a functional area (PF) differing therefrom.
d. step D: forming a package around at least one of the articles from the heated packaging material (P).
e. step E: sealing the package in the sealing area (PL, PQ) of the packaging material (P).

2. The method according to claim 1, **characterized in that** step A comprises at least one of the following substeps:
a. substep A-1: providing the packaging material (P) with at least one article-specific sealing mask.
b. substep A-2: unwinding the packaging material (P) from a roll of packaging material.
c. substep A-3: conveying the packaging material (P) in a conveying direction (F) along a packaging material path, preferably continuously in such a way that at least two spaced-apart longitudinal sealing surfaces (PL) are aligned parallel to the conveying direction (F) and/or at least two spaced-apart transverse sealing surfaces (PQ) are aligned transverse to the conveying direction (F), wherein the longitudinal sealing surfaces (PL) preferably extend along the longitudinal edges of the packaging material and/or the transverse sealing surfaces (PQ) extend from one longitudinal edge to the other longitudinal edge of the packaging material (P).
d. substep A-4: tightening the packaging material (P) in the conveying direction (F), preferably via at least one deflection roller, preferably two deflection rollers, between which a heating device (4) for applying thermal energy to the packaging material is arranged, so that the packaging material (P) extends at least partially in a plane within the range of action of the heating device (4) or the packaging material (P) at least partially forms a cylindrical outer surface.
e. substep A-5: separating the packaging material (P), preferably from a roll of packaging material, before or after joining it to the article.

3. The method according to any one of the preceding claims, **characterized in that** step B comprises at least one of the following substeps:
a. substep B-1: separating the articles from a supply of articles.
b. substep B-2: conveying the articles along the article track.
c. substep B-3: arranging separated articles in an article group, preferably by slowing down articles along the article track.

4. The method according to any one of the preceding claims, **characterized in that** step C comprises at least one of the following substeps:
a. substep C-1: arranging the packaging material (P) within the range of action of a heating device (4) so that the heating device (4) applies heating energy to the packaging material (P) by heat conduction (conduction) and/or heat radiation (radiation) and/or convection.
b. substep C-2: aligning the heating device (4) to the packaging material (P) or aligning the packaging material (P) to the heating device (4) using at least one reference mark (PM) of the packaging material (P), preferably using at least one reference mark (PM) for each section of the packaging material that can be joined to an article.
c. substep C-3: generating a heating pattern matched to the sealing area (PL, PQ) by means of a heating device (4) in order to heat the packaging material (P) in a tailored manner in the sealing area (PL, PQ) compared to the functional area (PF), preferably without heating the packaging material (P) in the functional area (PF).
d. substep C-4: moving and/or changing the heating pattern in accordance with a movement of the packaging material (P), preferably in accordance with a movement of at least one reference mark (PM) on the packaging material (P), preferably in the conveying direction of the packaging material (P), particularly preferably at the same speed as the packaging material (P).
e. substep C-5: applying heating energy to the packaging material (P) from one side or both sides of the packaging material (P).

5. The method according to any one of the preceding claims, **characterized in that** step D comprises at least one of the following substeps:
a. substep D-1: aligning the packaging material (P) to the at least one article, preferably in such a way that one sealable side of the packaging material (P) faces the article.
b. substep D-2: arranging the packaging material (P) in tubular form around the at least one article.

6. The method according to any one of the preceding claims, **characterized in that** step E comprises at least one of the following substeps:
a. substep E-1: forming a sealed seam configured as a fin seam by overlapping two sealing surfaces (PL, PQ) arranged on the same side of the packaging material (P).
b. substep E-2: forming a sealed seam configured as an overlapped seam by overlapping two sealing surfaces (PL, PQ) arranged on different sides of the packaging material.
c. substep E-3: closing the packaging around each individual article or around a group of articles made up of at least two articles, preferably in such a way that the article only contacts the packaging material (P) in the functional area (PF).
d. substep E-4: sealing the packaging material (P) in the area of two overlapping sealing surfaces (PL, PQ).

7. An apparatus (1) for packaging and sealing small-sized articles, such as confectionery, bouillon tablets or washing tabs, in a partially preheated heat-sealable packaging material (P), preferably according to the method according to any one of the preceding claims, comprising:
a. a packaging material supply device (2) for supplying a heat-sealable packaging material (P),
b. an article supply device (3) for supplying the small-sized articles, preferably in a row along at least one article track,
c. a heating device (4) for applying thermal energy to the packaging material (P) so that the packaging material (P) is locally heated up in a sealing area (PL, PQ) compared to a functional area (PF) differing therefrom,
d. a packaging device (5) for forming a package around at least one of the articles from the heated packaging material (P),
e. a sealing device (5) for sealing the package in the sealing area (PL, PQ) of the packaging material (P).

8. The apparatus (1) according to claim 7, **characterized in that** the heating device (4) is configured to generate a heating pattern specific to the article or packaging material, with the heating pattern preferably being matched to the sealing area (PL, PQ) and the heating pattern preferably being movable and/or changeable in accordance with a movement of the packaging material (P).

9. The apparatus (1) according to any one of claims 7 or 8, **characterized in that** the heating device (4) includes at least one stationary heating unit, the packaging material (P) being stationary or movable in relation to the stationary heating unit when heating energy is applied.

10. The apparatus (1) according to any one of claims 7 to 9, **characterized in that** the heating device (4) includes at least one movable heating unit which is configured to move during the application of heating energy to the packaging material (P), preferably in the conveying direction (F) of the packaging material (P), preferably translationally or rotationally, particularly preferably at a speed which is equal to or higher than the conveying speed of the packaging material (P) in the conveying direction (F).

11. The apparatus (1) according to any one of claims 7 to 10, **characterized in that** the heating device (4) includes at least one variable heating unit comprising a plurality of separately heatable and/or separately adjustable heating sections, wherein the heating sections are preferably arranged in a matrix, preferably in a plane or in a rotationally symmetrical outer surface.

12. The apparatus (1) according to any one of claims 7 to 11, **characterized in that** the heating device (4) includes a heating drum rotatable about an axis of rotation, wherein the heating drum includes two preferably annular heating sections (4a) spaced along its axis of rotation, preferably for two longitudinal sealing surfaces (PL) of the packaging material (P), and/or wherein the heating drum includes at least one preferably beamshaped heating section (4c) extending parallel to the axis of rotation, preferably for two transverse sealing surfaces (PQ) of the packaging material (P).

13. The apparatus (1) according to any one of claims 7 to 12, **characterized in that** the heating device (4) can be controlled as a function of at least one reference mark (PM) on the packaging material (P), wherein preferably the heating device (4) is movable as a function of at least one reference mark (PM) on the packaging material (P), wherein preferably at least one heating section (4a) of the heating device (4) can be moved and/or heated as a function of at least one reference mark (PM) on the packaging material (P).

14. The apparatus (1) according to any one of claims 7 to 13, **characterized in that** the heating device (4) is configured to apply heating energy to a plurality of identical sections of the packaging material according to an identical heating pattern, preferably in a continuous or discontinuous process.

## Revendications

1. Procédé pour emballer et sceller des articles de petite taille, tels que des confiseries, des cubes de bouillon ou des tablettes de détergent, dans un matériau d'emballage (P) thermoscellable partiellement préchauffé, comprenant les étapes suivantes :
a. étape A : fourniture d'un matériau d'emballage thermoscellable (P) ;
b. étape B : fourniture des articles de petite taille, de préférence en rangée le long d'au moins un chemin d'articles ;
c. étape C : application d'énergie thermique au matériau d'emballage (P) afin que le matériau d'emballage (P) chauffe dans une zone de scellage (PL, PQ) par rapport à une zone fonctionnelle (PF) distincte ;
d. étape D : formation d'un emballage autour d'au moins l'un des articles à partir du matériau d'emballage (P) auquel de l'énergie thermique est appliquée ;
e. étape E : scellage de l'emballage dans la zone de scellage (PL, PQ) du matériau d'emballage (P).

2. Procédé selon la revendication 1, **caractérisé en ce que** l'étape A comprend au moins l'une des sous-étapes suivantes :
a. sous-étape A-1 : fourniture au matériau d'emballage (P) d'au moins un masque de scellement spécifique à l'article ;
b. sous-étape A-2 : déroulage du matériau d'emballage (P) à partir d'un rouleau de matériau d'emballage ;
c. sous-étape A-3 : transport du matériau d'emballage (P) dans une direction de convoyage (F) le long d'un chemin de matériau d'emballage, de préférence sur une ligne, de préférence de telle manière qu'au moins deux surfaces de scellage longitudinal (PL) espacées soient alignées parallèlement à la direction de convoyage (F) et/ou au moins deux surfaces de scellage transversal (PQ) espacées soient alignées transversalement à la direction de convoyage (F), dans lequel les surfaces de scellage longitudinal (PL) s'étendent de préférence le long des bords longitudinaux du matériau d'emballage (P) et/ou les surfaces de scellage transversal (PQ) s'étendent de l'un à l'autre bord longitudinal du matériau d'emballage (P) ;
d. sous-étape A-4 : mise sous tension du matériau d'emballage (P) dans la direction de convoyage (F), de préférence via au moins un rouleau de renvoi, de préférence via deux rouleaux de renvoi, entre lesquels est agencé un dispositif de chauffage (4) pour appliquer de l'énergie thermique au matériau d'emballage, de sorte que le matériau d'emballage (P) dans la zone fonctionnelle du dispositif de chauffage (4) s'étende au moins partiellement dans un plan, ou le matériau d'emballage (P) forme au moins partiellement une surface enveloppante cylindrique ;
e. sous-étape A-5 : séparation du matériau d'emballage (P), de préférence d'un rouleau de matériau d'emballage, avant ou après son attribution à l'article.

3. Procédé selon l'une des revendications précédentes, **caractérisé en ce que** l'étape B comprend au moins l'une des sous-étapes suivantes :
a. sous-étape B-1 : séparation des articles provenant d'un stock d'articles ;
b. sous-étape B-2 : convoyage des articles le long du chemin d'articles ;
c. sous-étape B-3 : regroupement des articles séparés en un groupe d'articles, de préférence en créant une congestion de produits le long du chemin d'articles.

4. Procédé selon l'une des revendications précédentes, **caractérisé en ce que** l'étape C comprend au moins l'une des sous-étapes suivantes :
a. sous-étape C-1 : agencement du matériau d'emballage (P) dans la zone fonctionnelle d'un dispositif de chauffage (4), de sorte que le dispositif de chauffage (4) applique de l'énergie thermique au matériau d'emballage (P) par conduction thermique et/ou par rayonnement thermique et/ou par convection thermique ;
b. sous-étape C-2 : alignement du dispositif de chauffage (4) par rapport au matériau d'emballage (P) ou alignement du matériau d'emballage (P) par rapport au dispositif de chauffage (4) en fonction d'au moins un marquage de référence (PM) du matériau d'emballage (P), de préférence sur la base d'au moins un marquage de référence (PM) pour chaque section de matériau d'emballage pouvant être attribuée à un article ;
c. sous-étape C-3 : génération d'un motif de chauffage correspondant à la zone de scellage (PL, PQ) au moyen d'un dispositif de chauffage (4) afin de chauffer spécifiquement le matériau d'emballage (P) dans la zone de scellage (PL, PQ) par rapport à la zone fonctionnelle (PF), de préférence sans chauffer le matériau d'emballage (P) dans la zone fonctionnelle (PF) ;
d. sous-étape C-4 : déplacement et/ou modification du motif de chauffage en fonction d'un déplacement du matériau d'emballage (P), de préférence en fonction d'un déplacement d'au moins un marquage de référence (PM) sur le matériau d'emballage (P), de préférence dans le direction de convoyage du matériau d'emballage (P), de préférence encore à la même vitesse que le matériau d'emballage (P) ;
e. sous-étape C-5 : application d'énergie thermique au matériau d'emballage (P) d'un côté ou des deux côtés du matériau d'emballage (P).

5. Procédé selon l'une des revendications précédentes, **caractérisé en ce que** l'étape D comprend au moins l'une des sous-étapes suivantes :
a. sous-étape D-1 : attribution du matériau d'emballage (P) audit au moins un article, de préférence de telle manière qu'un côté scellable du matériau d'emballage (P) soit face à l'article ;
b. sous-étape D-2 : agencement du matériau d'emballage (P) sous forme d'un tube autour dudit au moins un article.

6. Procédé selon l'une des revendications précédentes, **caractérisé en ce que** l'étape E comprend au moins l'une des sous-étapes suivantes :
a. sous-étape E-1 : formation d'un joint de scellage sous forme d'un joint à bords repliés par recouvrement de deux surfaces de scellage (PL, PQ) agencées d'un même côté du matériau d'emballage (P) ;
b. sous-étape E-2 : formation d'un joint de scellage sous forme d'un joint à chevauchement par recouvrement de deux surfaces de scellage (PL, PQ) agencées sur des côtés différentes du matériau d'emballage ;
c. sous-étape E-3 : fermeture de l'emballage autour de chaque article individuel ou autour d'un groupe d'articles constitué d'au moins deux articles, de préférence de telle manière que l'article entre en contact avec le matériau d'emballage (P) uniquement dans la zone fonctionnelle (PF) ;
d. sous-étape E-4 : scellage du matériau d'emballage (P) dans la zone de deux surfaces de scellage (PL, PQ) chevauchantes.

7. Dispositif (1) pour emballer et sceller des articles de petite taille, tels que des confiseries, des cubes de bouillon ou des tablettes de détergent, dans un matériau d'emballage (P) thermoscellable partiellement préchauffé, de préférence selon le procédé de l'une des revendications précédentes, comprenant :
a. un dispositif de fourniture de matériau d'emballage (2) destiné à fournir un matériau d'emballage thermoscellable (P) ;
b. un dispositif de fourniture d'articles (3) destiné à fournir les articles de petite taille, de préférence en rangée le long d'au moins un chemin d'articles ;
c. un dispositif de chauffage (4) destiné à appliquer de l'énergie thermique au matériau d'emballage (P), de telle sorte que le matériau d'emballage (P) chauffe dans une zone de scellage (PL, PQ) par rapport à une zone fonctionnelle (PF) distincte ;
d. un dispositif d'emballage (5) destiné à former un emballage autour d'au moins l'un des articles à partir du matériau d'emballage (P) auquel de l'énergie thermique est appliquée ;
e. un dispositif de scellage (5) destiné à sceller l'emballage dans la zone de scellage (PL, PQ) du matériau d'emballage (P).

8. Dispositif (1) selon la revendication 7, **caractérisé en ce que** le dispositif de chauffage (4) est conçu pour générer un motif de chauffage spécifique à un article ou à un matériau d'emballage, dans lequel le motif de chauffage correspond de préférence à la zone de scellage (PL, PQ), dans lequel le motif de chauffage est de préférence déplaçable et/ou modifiable en fonction d'un déplacement du matériau d'emballage (P).

9. Dispositif (1) selon l'une des revendications 7 et 8, **caractérisé en ce que** le dispositif de chauffage (4) comporte au moins une unité de chauffage stationnaire, dans lequel le matériau d'emballage (P) est debout ou se déplace par rapport à l'unité de chauffage stationnaire lors de l'application d'énergie thermique.

10. Dispositif (1) selon l'une des revendications 7 à 9, **caractérisé en ce que** le dispositif de chauffage (4) comporte au moins une unité de chauffage mobile, qui est configurée de manière à se déplacer lors de l'application d'énergie thermique au matériau d'emballage (P), de préférence dans la direction de convoyage (F) du matériau d'emballage (P), de préférence en translation ou en rotation, de préférence encore à une vitesse supérieure ou égale à la vitesse de convoyage du matériau d'emballage (P) dans la direction de convoyage (F).

11. Dispositif (1) selon l'une des revendications 7 à 10, **caractérisé en ce que** le dispositif de chauffage (4) comporte au moins une unité de chauffage variable qui comprend une pluralité de sections de chauffage pouvant être chauffées et/ou déplacées séparément, dans lequel les sections de chauffage sont de préférence agencées sous forme d'une matrice, de préférence dans un plan ou dans une surface enveloppante à symétrie de rotation.

12. Dispositif (1) selon l'une des revendications 7 à 11, **caractérisé en ce que** le dispositif de chauffage (4) comporte un tambour chauffant pouvant tourner autour d'un axe de rotation, dans lequel le tambour chauffant comporte deux sections de chauffage (4a) de préférence annulaires, espacées le long de son axe de rotation, de préférence pour deux surfaces de scellage longitudinal (PL) du matériau d'emballage (P), et/ou dans lequel le tambour chauffant comporte au moins une section de chauffage (4c), de préférence en forme de barre, qui s'étend parallèlement à l'axe de rotation, de préférence pour deux surfaces de scellage transversal (PQ) du matériau d'emballage (P).

13. Dispositif (1) selon l'une des revendications 7 à 12, **caractérisé en ce que** le dispositif de chauffage (4) est contrôlable en fonction d'au moins un marquage de référence (PM) sur le matériau d'emballage (P), dans lequel le dispositif de chauffage (4) peut de préférence être déplacé en fonction d'au moins un marquage de référence (PM) sur le matériau d'emballage (P), dans lequel au moins une section de chauffage (4a) du dispositif de chauffage (4) peut de préférence être déplacée et/ou chauffée en fonction d'au moins un marquage de référence (PM) sur le matériau d'emballage (P).

14. Dispositif (1) selon l'une des revendications 7 à 13, **caractérisé en ce que** le dispositif de chauffage (4) est conçu de manière à appliquer de l'énergie thermique à une pluralité de sections identiques du matériau d'emballage selon un motif de chauffage identique, de préférence dans un processus continu ou discontinu.
